# EUROPÄISCHE PATENTSCHRIFT

(11) **EP 2 067 341 B1**
(45) Veröffentlichungstag und Bekanntmachung des Hinweises auf die Patenterteilung: **06.11.2013**
(21) Anmeldenummer: 07820143.1
(22) Anmeldetag: 12.09.2007
(51) Int. Cl.: H04L 29/06, H04L 12/22

(54) **COMPUTERSYSTEM UND VERFAHREN ZUR SIGNIERUNG, SIGNATURVERIFIZIERUNG UND / ODER ARCHIVIERUNG**
COMPUTER SYSTEM AND METHOD FOR SIGNING, SIGNATURE VERIFICATION AND/OR ARCHIVING
SYSTÈME INFORMATIQUE ET PROCÉDÉ DE SIGNATURE, DE VÉRIFICATION DE SIGNATURE ET/OU D'ARCHIVAGE

(30) Priorität: 12.09.2006 DE 102006043497
(43) Veröffentlichungstag der Anmeldung: 10.06.2009
(73) Patentinhaber: Bundesdruckerei GmbH, 10958 Berlin (DE)
(72) Erfinder: ZISKA, Andreas, 12107 Berlin (DE)
(74) Vertreter: Richardt Patentanwälte GbR
(86) Internationale Anmeldenummer: PCT/EP2007/059572
(87) Internationale Veröffentlichungsnummer: WO 2008/031840

(56) Entgegenhaltungen:
- EP-A- 1 701 282
- WO-A-01/82036
- WO-A-03/015370

## Beschreibung

Die Erfindung betrifft ein Computersystem sowie ein Verfahren zur Signierung, Signaturverifizierung und / oder Archivierung von Daten und ein entsprechendes Computerprogrammprodukt.

Verfahren zur elektronischen Signierung von Dokumenten sind an sich aus dem Stand der Technik bekannt. Für die elektronische Signierung eines Dokuments wird ein Schlüsselpaar erzeugt, welches aus einem geheimen (sogenannter "Private Key") und einem öffentlichen Schlüssel (sogenannter "Public Key") besteht. Im Allgemeinen wird aus dem Dokument ein HASH-Wert mit einer vordefinierten HASH-Funktion erzeugt. Der HASH-Wert wird dann mit dem geheimen Schlüssel verschlüsselt. Das so erhaltene Chiffrat stellt die elektronische Signatur dar. Der zu dem Schlüsselpaar gehörende öffentliche Schlüssel kann zur Verifizierung der Echtheit der Signatur verwendet werden, indem der HASH-Wert erneut aus dem Dokument erzeugt wird und die elektronische Signatur mit dem öffentlichen Schlüssel dechiffriert wird. Stimmen die beiden so erhaltenen HASH-Werte überein, so wird die elektronische Signatur als echt betrachtet.

Die Rahmenbedingungen für die Verwendung elektronischer Signaturen sind für den Bereich der Europäischen Union durch die Richtlinie 1999 / 93 / EG des Europäischen Parlaments und des Rates vom 13. Dezember 1999 über gemeinschaftliche Rahmenbedingungen für elektronische Signaturen gesetzt worden. In der Bundesrepublik Deutschland ist diese Richtlinie durch das Signaturgesetz umgesetzt worden. Sofern die rechtlichen Rahmenbedingungen des Signaturgesetzes eingehalten werden, ist gemäß § 126 a des Bürgerlichen Gesetzbuches die qualifizierte elektronische Signatur der eigenhändigen Unterschrift weitgehend gleichgestellt, so dass auch das Schriftformerfordernis durch eine qualifizierte elektronische Signatur erfüllt werden kann.

Bisher ist jedoch die Verwendung von elektronischen Signaturen im Rechtsverkehr mit verschiedenen Schwierigkeiten verbunden:
1. Viele existente Applikationen, insbesondere sog. Legacy Systeme, wie zum Beispiel sogenannte "Enterprise Resource Planning" (ERP) -Systeme, unterstützen nicht die elektronische Signaturfunktion.
2. Unterschiedliche Datenformate, wie zum Beispiel EDIFACT, IDOC, XML, CCG-ASCI oder BEMIS Datenformate, erschweren den Austausch elektronisch signierter Dokumente zwischen verschiedenen Systemen.
3. Die Umstellung auf elektronische Signaturverfahren erfordert relativ hohe Investitionen in Informationstechnologie und Mitarbeiterschulung.
4. Für manche Anwendungen ist die Schaffung einer Hochsicherheitsumgebung zum Schutz der signierten, verifizierten und / oder archivierten Daten vor Manipulationen erforderlich, was ebenfalls sehr aufwändig ist.

Aus CA 23 84 944 A1 ist ein Dokument Management System bekannt, welches verschiedene Dienste anbietet, insbesondere die elektronische Signatur von Dokumenten.

WO01/82036 A offenbart ein System und ein Verfahren zur Signierung, Speicherung und Authentisierung elektronischer Dokumente mittels Public-Key-Kryptographie. Das System umfasst einen Dokumentenservice-Computercluster, der mit mehreren Nutzer-Computern, Dokumentbesitzer-Servercomputern und Registrierungs-Computern über ein Netzwerk verbunden ist. Dokumentenbesitzer und Nutzer des Systems können elektronische Dokumente in einer verschlüsselten Datenbank des Dokumentenservice-Computerclusters speichern oder auf einem sicheren Speichermedium, das mit dem Dokumentenbesitzer-Computercluster verbunden ist. Nutzer können sich zum Beispiel mittels Passwort in das System einloggen, und einen Signaturrequest an den Dokumentenservice-Computercluster senden. Dieser Dokumentenservice-Computercluster liest einen privaten Schlüssel des Nutzers von einer Datenbank des Clusters und signiert mit diesem privaten Schlüssel das Dokument. Das Systems ermöglicht es Nutzern von einem beliebigen Clientgerät mit Zugang zum World Wide Web Dokumente zu signieren, wobei der private Schlüssel auf Seiten des Dokumentenservice-Computerclusters gespeichert ist.

WO03/015370 A offenbart ein System und ein Verfahren zur Signierung elektronischer Daten mittels einer digitalen Signatur. Ein zentraler Server beinhaltet einen Signaturserver und einen Authentifizierungsserver. Der Signaturserver speichert die privaten kryptografischen Schlüssel einer Vielzahl von Nutzern. Ein Nutzer kann mit dem zentralen Server über eine Workstation durch eine sichere Tunnelverbindung Daten austauschen um z.B. ein Passwort oder ähnliche Authentifizierungsdaten an den Authentifizierungsserver zu übermitteln. Der Authentifizierungsserver übermittelt dem Signaturserver ein Derivat dieser Authentifizierungsdaten über einen permanenten sicheren Datenübertragungskanal zwischen diesen beiden Servern. Das Derivat wird mit den Authentifizierungsdaten verglichen, die der Nutzer direkt über den sicheren Datenübermittlungskanal an den Signaturserver übermittelt hat. Nur wenn der Datenvergleich ergibt, dass sich die verglichenen Datensätze entsprechen, werden Nutzerdaten mit dem privaten Schlüssel des Nutzers signiert.

Die zum Anmeldezeitpunkt unveröffentlichte Patentanmeldung DE 10 2005 011 166 und die europäische Patentanmeldung Anmeldung Nr. 06110099 betreffen ein Computersystem mit Mitteln zur Herstellung von Kommunikationsverbindungen mit mehreren Teilnehmern, Mitteln zur Signierung von Daten, die von einem der Teilnehmer empfangen worden sind, Mitteln zur Verifizierung einer elektronischen Signatur von Daten, die von einem der Teilnehmer empfangen worden sind, Mittel zur Archivierung von Daten, die von einem der Teilnehmer empfangen worden sind, und Mittel zur Speicherung von Teilnehmerprofilen, wobei durch ein Teilnehmerprofil festgelegt ist, ob von dem betreffenden Teilnehmer empfangene Daten zu signieren, zu verifizieren und/oder zu archivieren sind. Ferner können bei einem solchen Computersystem auch Mittel zur Konvertierung der Daten in ein Verarbeitungsformat vorgesehen sein.

Dieses vorangemeldete Computersystem setzt also zwingend voraus, dass sich die Teilnehmer mit ihren Teilnehmerprofilen vor Nutzung des Computersystems registrieren lassen, indem ihre jeweiligen Teilnehmerprofile definiert und hinterlegt werden.

Der Erfindung liegt dem gegenüber die Aufgabe zu Grunde, ein verbessertes Computersystem und ein Verfahren zur Signierung, Signaturverifizierung und / oder Archivierung von Daten zu schaffen, sowie auch ein entsprechendes Computerprogrammprodukt, welches die Verwendung von elektronischen Signaturen im Rechtsverkehr erleichtert.

Die der Erfindung zu Grunde liegenden Aufgaben werden jeweils mit den Merkmalen der unabhängigen Patentansprüche gelöst. Bevorzugte Ausführungsformen sind in den abhängigen Patentansprüchen angegeben.

Erfindungsgemäß wird ein Computersystem geschaffen, das Mittel zur Herstellung von Kommunikationsverbindungen mit mehreren Teilnehmern, Mittel zur Signierung der von einem Teilnehmer empfangenen Daten durch eine erste Funktion, Mittel zur Verifizierung einer elektronischen Signatur der von einem Teilnehmer empfangenen Daten durch eine zweite Funktion, Mittel zur Archivierung der von einem Teilnehmer empfangenen Daten durch eine dritte Funktion und Mittel zur Weiterleitung von Daten an einen anderen der Teilnehmer durch eine vierte Funktion aufweist. Das Computersystem hat ferner Mittel zur Verfügungsstellung von Methoden, wobei jede der Methoden durch zumindest eine der ersten bis vierten Funktionen oder durch eine sequentielle und/oder parallele Verkettung von mehreren der ersten bis vierten Funktionen definiert ist, sowie Mittel zur Ermöglichung eines Aufrufs der Methoden durch die Teilnehmer über die Kommunikationsverbindungen.

Durch die Erfindung wird also eine Plattform geschaffen, die es über externe Computersysteme verschiedenen Teilnehmern ermöglicht, Dienste, die im Zusammenhang mit der elektronischen Signatur stehen, in Anspruch zu nehmen, ohne dass die Teilnehmer wesentliche Veränderungen an deren existenten IT-Systemen, beispielsweise ERP-Anwendungen, vornehmen müssen. Diese verschiedenen Dienste, die von dem Computersystem zur Verfügung gestellt werden, können also von den Teilnehmern nach Belieben durch den Aufruf der entsprechenden Methoden in Anspruch genommen werden. Jede der Methoden beinhaltet dabei eine oder mehrere der von dem Computersystem implementierten Grundfunktionen.

Bei den Grundfunktionen handelt es sich um elementare Funktionen, die für den Umgang mit Dokumenten im elektronischen Rechtsverkehr benötigt werden, wie zum Beispiel eine Funktion zur Signierung der Daten, eine Funktion der Verifizierung einer elektronischen Signatur, einer Funktion zur Archivierung der Daten, eine Funktion zur Weiterleitung der Daten über ein spezifiziertes Kommunikationsmedium und/oder andere Funktionen, wie zum Beispiel eine Funktion zur Datenkomprimierung und eine Funktion zur Datenkonvertierung z.B. in ein Verarbeitungsformat und/oder in ein gewünschtes Empfängerformat. Durch die Definition von Methoden werden diese Grundfunktionen zu sinnvollen Diensten zusammengestellt.

Im einfachsten Fall kann dabei eine Methode durch eine einzelne der Grundfunktionen realisiert sein, wie zum Beispiel durch die Grundfunktion zum Signieren der Daten. Die Konvertierung der Daten kann als mit dem Signieren, Verifizieren und Archivieren gleichberechtigte Methode von den Teilnehmern ausgewählt werden. Sie ist allerdings nicht in jedem Fall vorgesehen.

Eine Methode kann jedoch auch durch mehrere der Grundfunktionen gebildet werden. Durch eine sequentielle und/oder parallele Verkettung solcher Grundfunktionen und/oder weiterer Funktionen kann durch eine Methode ein mehr oder weniger komplexer Workflow definiert sein.

Beispielsweise kann durch eine der Methoden ein Dienst zur Verfügung gestellt werden, durch den zunächst die Daten signiert werden, um sie anschließend zu archivieren und per Email an einen anderen Teilnehmer weiterzuleiten. Die Grundfunktionen für das Archivieren und das Weiterleiten per Email können dabei je nach Definition der Methode nacheinander oder gleichzeitig abgearbeitet werden.

Ferner kann beispielsweise eine weitere Methode definiert sein, wonach zunächst die Signatur der Daten erfolgt und anschließend die Verifizierung der elektronischen Signatur im Sinne einer so genannten Anschlussverifikation, damit die Verifikation nicht von dem anderen Teilnehmer vorgenommen werden muss, der die signierten Daten empfangen soll. Nach der Anschlussverifikation folgt dann die Grundfunktion für die Weiterleitung der Daten per Email.

Nach dem deutschen Signaturgesetz und der anderen relevanten Vorschriften, kann der Anbieter des Signaturdienstes die Anschlussverifikation nur dann vornehmen, wenn diese prozess- und personenmäßig getrennt von dem Signaturdienst erfolgt. Da das erfindungsgemäße Computersystem eine solche Trennung leisten kann, nämlich durch getrennte Durchführung der Grundfunktionen "Signatur" und "Verifikation", wird der gesamte Prozess erheblich vereinfacht, da der Rechnungsempfänger sonst immer die Hürde der Verifikation hat, was dazu führen kann, dass manche Empfänger elektronisch signierte Rechnungen generell ablehnen.

Eine weitere Methode kann unter Verwendung der Grundfunktion für die Verifizierung einer elektronischen Signatur definiert sein.

Eine weitere Methode kann für die Verifizierung einer elektronischen Signatur und der nachfolgenden Archivierung der Daten definiert sein, etc.

Das Computersystem stellt also den Teilnehmern über Kommunikationsverbindungen verschiedene vordefinierte Dienste bereit, die von den Teilnehmern nach Belieben durch entsprechende Methodenaufrufe nutzbar sind.

Von besonderem Vorteil ist dabei, dass bei geänderten oder zusätzlichen Anforderungen der Teilnehmer an die Dienste mit minimalem Aufwand die entsprechenden Dienste durch das Computersystem zur Verfügung gestellt werden können, indem dort entsprechende modifizierte oder zusätzliche Methoden definiert werden. Unter Umständen kann es.dabei erforderlich sein, auch weitere Grundfunktionen in dem Computersystem zu implementieren, derer sich die Methoden dann bedienen können. Dadurch stellt das erfindungsgemäße Computersystem eine äußerst flexible Lösung für die im Zusammenhang mit der elektronischen Signatur bestehenden Bedürfnisse der Teilnehmer dar.

Nach einer Ausführungsform der Erfindung ist die Kommunikationsschnittstelle des erfindungsgemäßen Computersystems so ausgebildet, dass die Methodenaufrufe durch sog. Remote Function Calls (RFC) durch die Teilnehmer erfolgen können.

Nach einer Ausführungsform der Erfindung werden die Dienste des Computersystems den Teilnehmern über einen Webservice zur Verfügung gestellt. Der Webservice entspricht dabei vorzugsweise einem der von dem World Wide Web Konsortium (W3C) entwickelten Web-Services-Standard, insbesondere auch einer Semantic-Web-Technologie.

Bei einer Ausführungsform der Erfindung erfolgt der Aufruf der von dem Web-Service bereitgestellten Methoden seitens der Teilnehmer mittels Simple Object Access Protocol (SOAP)-Nachrichten. Über diese Nachrichten werden insbesondere auch die Parameter für die Methodenaufrufe sowie die Daten und/oder elektronischen Signaturen an die jeweiligen Methoden übergeben.

Nach einer Ausführungsform der Erfindung werden die von dem Web-Service zur Verfügung gestellten Methoden mit Hilfe der Web Service Description Language (WSDL) beschrieben. Die Teilnehmer können diese Beschreibung der durch den Web-Service zur Verfügung gestellten Methoden durch Abruf eines entsprechenden WSDL-Dokuments von dem Web-Service in Erfahrung bringen.

Auf dieser Grundlage kann ein Teilnehmer zum Beispiel sein ERP-System konfigurieren, so dass es mit den von dem Web-Service zur Verfügung gestellten Methoden interoperabel wird. Dies kann manuelle Eingriffe in das ERP-System des Teilnehmers erforderlich machen oder auch teil- oder vollautomatisch erfolgen, insbesondere dann, wenn das ERP-System des Teilnehmers eine W3C-konforme Schnittstelle aufweist.

Nach einer Ausführungsform der Erfindung wird das WSDL-Dokument in einem externen Verzeichnis gespeichert, um die Auffindbarkeit des von dem Computersystem zur Verfügung gestellten Web-Service und seiner Dienste zu erleichtern. So kann beispielsweise DISCO (Discovery of Web Services) eingesetzt werden. Danach kann ein Teilnehmer ein so genanntes Discovery-Dokument an einen externen Verzeichnisserver senden, der daraufhin eine Abfrage in einem Verzeichnis nach einem passenden WebService durchführt. Wenn ein solcher gefunden wird, antwortet der Verzeichnisserver mit dem WSDL-Dokument des betreffenden Web-Services, hier also mit dem WSDL-Dokument des von dem erfindungsgemäßen Computersystem angebotenen WebService. Für die so genannte Discovery von Web-Services kann auch das Universal Description, Discovery, Integration (UDDI)-Protokoll eingesetzt werden. Die Spezifikation von UDDI ist unter www.uddi.org abrufbar.

Nach einer Ausführungsform der Erfindung werden durch das Computersystem auch Formatkonvertierungen vorgenommen. Von einem externen Computersystem eines Teilnehmer empfangene Daten, die in einem Sender-Format vorliegen, werden von dem Computersystem in ein von dem Computersystem verwendetes Verarbeitungs-Format, beispielsweise in ein Format einer Auszeichnungssprache (sog. mark-up language), insbesondere ein kanonisches XML-Format, konvertiert.

Vorzugsweise erfolgt für die Kommunikation zwischen dem Computersystem und einem externen Computersystem eines Teilnehmers eine Maschine-Maschine-Kopplung, die eine komplett automatisierte Verarbeitung ermöglicht.

Alternativ oder zusätzlich zu Webservices kann die Kommunikation beispielsweise auch über Mail, FTP, sFTP, OFTP, AS1, AS2, AS3, RosettaNet, telebox400 erfolgen. Die zu verarbeitenden Daten können z.B. als .pdf, .tiff, .jpeg, .doc, .xls, EDIFACT, ASCII, IDS, XML, SAP IDOC, ANSI X.12 oder FORTRAS von dem externen Computersystem an das Computersystem übergeben werden, wobei die strukturierten Daten auch in andere strukturierte oder unstrukturierte Format konvertiert werden können.

Wenn die Daten an einen Empfänger weiterzuleiten sind, der ein anderes Datenformat benötigt, werden die Daten aus dem Verarbeitungs-Format in das gewünschte Empfänger-Format konvertiert. Die Verwendung eines einzigen Verarbeitungs-Format durch das Computersystem hat den Vorteil, dass sich dadurch die Anzahl der Konvertierungsfunktionen drastisch reduzieren lässt. Wenn das Computersystem beispielsweise eine Anzahl von n Sender-Formaten und eine Anzahl von m Empfänger-Formaten unterstützen soll, wären an sich n x m Konverter für die Konvertierung von jedem Sender-Format in jedes Empfänger-Format erforderlich. Durch die Erfindung wird die Anzahl der Konverter auf maximal n + m reduziert.

Nach einer Ausführungsform der Erfindung muss sich ein Teilnehmer und/oder das externe Computersystem, welches der Teilnehmer verwendet, vor der Inanspruchnahme der von dem Computersystem zur Verfügung gestellten Dienste gegenüber dem Computersystem authentifizieren. Hierzu wird vorzugsweise ein Authentifizierungsverfahren mit einem kryptographischen Protokoll verwendet, wie zum Beispiel das Secure Sockets Layer Version 3 (SSLV3) Protokoll. Die gesicherte Kommunikation zwischen dem externen Computersystem des Teilnehmers und dem erfindungsgemäßen Computersystem erfolgt beispielsweise mit Hilfe eines Zertifikats. Das Zertifikat ermöglicht eine Authentisierung des Teilnehmers und/oder dessen externen Computersystems gegenüber dem Computersystem sowie die Kommunikation mit dem Computersystem über eine sichere Verbindung, wie zum Beispiel HTTPS. Beispielsweise wird das Zertifikat von dem Betreiber des Computersystems ausgegeben, da sich das Computersystem vorzugsweise ohnehin in einem so genannten Trust-Center, also einer speziell gesicherten Umgebung, befindet, die die gesetzlichen Anforderungen für die Erstellung von Zertifikaten erfüllt.

Die Datenübertragung zwischen den externen Computersystemen der Teilnehmer und dem Computersystem erfolgt vorzugsweise über ein Datenprotokoll, wie zum Beispiel TCP / IP, wie z.B. HTTPS, Telebox 400 oder eine abgesicherte Tunnelverbindung eines virtual private network (VPN).

Nach einer Ausführungsform der Erfindung bietet das Computersystem die Möglichkeit Daten von einem Senderformat eines Teilnehmers in ein Empfängerformat eines anderen Teilnehmers zu konvertieren. Dabei werden die von einem Teilnehmer empfangenen Daten zunächst in ein kanonisches XML-Format konvertiert und anschließend in das Empfängerformat eines anderen der Teilnehmer. Hierzu kann eine individuelle Anpassung des Computersystems für den Sendeteilnehmer notwendig sein, wenn dieser ein spezielles Senderformat verwendet. Bei einer solchen Anpassung werden kundenindividuelle Methoden zur Konvertierung entwickelt, die das System von da an mit einer bestimmten Kennung bereit hält. Nach der Anpassung werden den Teilnehmern die entsprechenden Methoden zur Verfügung gestellt. Der sendende Teilnehmer ruft die Methode zur Konvertierung seiner Daten mit beiden Kennungen auf. Die erste Kennung bestimmt die Konvertierung der Daten des sendenden Teilnehmers aus dessen Datenformat in das von dem Computersystem verwendete Datenformat (kanonisches XML), die zweite Kennung bestimmt die Konvertierung aus dem von dem Computersystem verwendeten Datenformat in das Empfängerformat.

Nach einer Ausführungsform der Erfindung hat das Computersystem mehrere Transmission Control Protocol (TCP) Ports, wobei jedem Port ein Sender-Format zugeordnet ist. Beispielsweise werden freie Port-Adressen im fünfstelligen Bereich verwendet. Eine Port-Adresse ist beispielsweise dem Format EDIFACT, eine weitere Port-Adresse dem Format IDOC und eine weitere Port-Adresse dem Format CCG-ASCI zugeordnet. Wenn ein Teilnehmer beispielsweise das Format EDIFACT verwendet, so sendet der Teilnehmer seine Anforderung (Request) an die dem EDIFACT-Format zugeordnete Port-Adresse des Computersystems. Diesem Port ist ein Konvertierungsprogramm zugeordnet, welches die Konvertierung von EDIFACT in das von dem Computersystem verwendete Verarbeitungs-Format vornimmt.

Nach einer Ausführungsform der Erfindung werden die Teilnehmer mit Hilfe von Zertifikaten authentifiziert. Diese Teilnehmer-Zertifikate können Beschränkungen definieren, beispielsweise hinsichtlich bestimmter Mitarbeiter des Teilnehmers und deren Berechtigungen. Dazu werden bestimmte Felder im Zertifikat mit Informationen versehen, welche vom Computersystem ausgewertet werden können und die beispielsweise dazu dienen können, Zugriffsbeschränkungen für bestimmte Personen und Personenkreise z.B. auf bestimmte Archivzeiträume und / oder -ordner zu installieren. Die Teilnehmer werden damit in die Lage versetzt, teilnehmerseitig eigene Zugriffsprofile zu verwalten. Die Daten werden an den Empfänger per Email versendet, oder dieser holt sie per Zugriff auf das Archiv ab.

Nach einer Ausführungsform der Erfindung wird mit Hilfe von Authentifizierungsdaten eines Teilnehmers auf dessen Teilnehmerprofil zugegriffen. Beispielsweise ist dem Teilnehmer eine Teilnehmerkennung zugeordnet, die als Schlüssel verwendet wird, um auf das Teilnehmerprofil in einer Konfigurationsdatenbank zuzugreifen. In der Konfigurationsdatenbank sind teilnehmerspezifische Parameter abgelegt, die also nicht bei jedem Methodenaufruf wieder als Parameter mit übergeben werden müssen.

Nach einer Ausführungsform der Erfindung beinhalten die von einem Teilnehmer empfangenen Daten eine Kennung eines anderen Teilnehmers, an den die Daten weitergeleitet werden sollen. Mit Hilfe dieser Kennung kann auf das Teilnehmerprofil des weiteren Teilnehmers zugegriffen werden, um beispielsweise das von dem weiteren Teilnehmer gewünschte Datenformat, die Art der Weiterleitung der Daten an den weiteren Teilnehmer - zum Beispiel auf elektronischem Wege oder als Ausdruck - sowie die Adresse des weiteren Teilnehmers auszulesen.

Ein erster Teilnehmer der an einen zweiten Teilnehmer eine elektronische Rechnung versenden möchte, ruft die entsprechende Methode des Computersystems (Signieren, Verifizieren und Emailversand) auf. Möchte der Teilnehmer zusätzlich Archivieren, so ruft er eine entsprechend andere Methode des Computersystems (Signieren, Verifizieren, Archivieren und Emailversand) auf. Bei beiden Methoden gibt der erste Teilnehmer beim Methodenaufruf die Emailadresse des empfangenden Teilnehmers an. Eine andere Möglichkeit ist, dass der empfangende Teilnehmer sich die Rechnung über eine Methode des Computersystems (Retrieve Archive) aus dem Archiv selbst abholt (Pull).

Die in dem Datenformat des ersten Teilnehmers empfangenen Daten werden in das von dem Computersystem verwendete Datenformat (kanonisches XML) konvertiert. Danach erfolgt die Konvertierung der Daten aus dem von dem Computersystem verwendetem Format (kanonisches XML) in das von dem zweiten Teilnehmer spezifizierte Datenformat, d.h. das Empfänger-Format, sowie die elektronische Signierung der in das Empfänger-Format konvertierten Daten. Die Signierung kann durch eine elektronische Signatur des Betreibers des Computersystems vorgenommen werden, insbesondere in einem so genannten Massensignaturverfahren. Hierzu ist es erforderlich, dass der erste Teilnehmer dem Betreiber des Computersystems die Vollmacht für die Signierung von dessen elektronischen Rechnungen erteilt hat. Der Teilnehmer erteilt die Vollmacht im Vertrag mit dem Betreiber. Erst danach bekommt er ein entsprechendes Zertifikat, mit dem der Teilnehmer die gewünschten Methoden aufrufen kann.

Falls der erste Teilnehmer eine solche Vollmacht nicht erteilt hat, werden die in das Empfänger-Format konvertierten Daten an den ersten Teilnehmer übertragen, so dass dieser mit einem Signatur-Client die elektronische Signatur selbst vornehmen kann. Die von dem ersten Teilnehmer signierten Daten werden dann an das Computersystem übertragen und von dort an den zweiten Teilnehmer weitergeleitet. Ferner werden die Daten von dem Computersystem archiviert, wenn der erste Teilnehmer dies durch Aufruf der entsprechenden Methode veranlasst.

Nach einer Ausführungsform der Erfindung ist die Signierungskomponente zur Durchführung eines parallelisierten Massensignaturverfahrens ausgebildet, und hat Mittel zur dynamischen Lastverteilung (sog. "Load Balancing") zwischen den Chipkarten, die zur Generierung der elektronischen Signaturen vorgesehen sind. Unter "parallelisierten Massensignaturverfahren" wird hier jedes Signaturverfahren verstanden, bei dem die Generierung der elektronischen Signaturen gleichzeitig durch mehrere Chipkarten erfolgt.

Nach einer Ausführungsform der Erfindung werden eine oder mehrere Warteschlangen für die Ausführungen von Aufrufen der ersten Funktion zur Generierung von elektronischen Signaturen gebildet. Hierdurch erfolgt eine Parallelisierung der Erzeugung der elektronischen Signaturen.

Zur Erzeugung der Massensignaturen dient eine Massensignaturvorrichtung, die zum Beispiel ein sogenanntes Chipkarten-Rack mit mehreren Chipkarten beinhaltet. Jede der Chipkarten ist zur Generierung einer elektronischen Signatur ausgebildet. Die Zuordnung der Elemente einer Warteschlange zu einer der Chipkarten erfolgt durch einen sogenannten Scheduler.

Der Scheduler kann ein Verfahren zur dynamischen Lastverteilung, das heißt für das sogenannte Load Balancing, implementieren, um die für die Vornahme der elektronischen Signaturen zur Verfügung stehenden Chipkarten möglichst effizient zu verwenden.

Durch die Bildung einer Warteschlange und die Zuordnung von Elementen der Warteschlange zu den Chipkarten der Massensignaturvorrichtung mit Hilfe einer dynamischen Lastverteilung wird eine Parallelisierung des Massensignaturverfahrens erreicht, welches einen hohen Durchsatz mit einer relativ geringen Anzahl von Chipkarten ermöglicht.

Nach einer Ausführungsform der Erfindung ist für die Chipkarten der Massensignaturvorrichtung eine vorgegebene Reihenfolge definiert. Jede der Chipkarte hat einen ersten oder einen zweiten Status. In dem ersten Status ist die Chipkarte zum Empfang eines Chipkartenkommandos für die Erzeugung einer elektronischen Signatur bereit, das heißt, sie steht zur Verarbeitung eines Elements der Warteschlange zur Verfügung. In dem zweiten Status ist die Chipkarte dagegen "busy", das heißt, sie steht zumindest temporär für die Entgegennahme eines Elements der Warteschlange zur Generierung einer elektronischen Signatur nicht zur Verfügung, weil die Chipkarte beispielsweise gerade für ein bereits zuvor der Chipkarte zugeordnetes Element der Warteschlange eine solche elektronischen Signatur generiert. Sobald die Chipkarte eine solche elektronischen Signatur generiert hat, gibt sie ein entsprechendes Signal an den Scheduler ab, so dass dieser den Status der Chipkarte von dem zweiten Status ("busy") auf den ersten Status ("frei") zurücksetzt.

Der Scheduler ist beispielsweise so ausgebildet, dass er ein Element der Warteschlange, welches an der Reihe ist, einer der Chipkarten zuordnet, die aktuell den ersten Status aufweisen. Die Zuordnung zu einer der Chipkarten, die den ersten Status aufweisen, kann dabei in der vorgegebenen Reihenfolge der Chipkarten erfolgen. Wenn beispielsweise zehn Chipkarten mit den laufenden Nummern 1 bis 10 in der Massensignaturvorrichtung für die Abarbeitung der Warteschlange zur Verfügung stehen und von diesen zehn Chipkarten die Chipkarten 2, 4, 7und 8 zu einem bestimmten Zeitpunkt den ersten Status "frei" aufweisen, so ordnet der Scheduler das nächste Element der Warteschlange den freien Chipkarten in der durch die laufende Nummer der Chipkarten gegebenen Reihenfolge zu, das heißt, in dem betrachteten Beispiel würde das nächste Element der Warteschlange der Chipkarte Nummer 2 zugeordnet. Das nächst folgende Element der Warteschlange würde der Chipkarte 4 und nachfolgende Elemente der Warteschlange den Chipkarten 7 und 8 zugeordnet.

Nach einer Ausführungsform der Erfindung hat der Scheduler eine Timeout-Komponente, die so ausgebildet ist, dass eine Chipkarte, die länger als einen vorgegebenen Zeitraum in dem zweiten Status verharrt, aus der Reihenfolge der Chipkarten entfernt wird. Dies bedeutet, dass eine solche Chipkarte zum Beispiel aufgrund eines Defekts als zumindest temporär nicht mehr zur Verfügung stehend betrachtet wird.

Wenn beispielsweise innerhalb des vorgegebenen Zeitraums, nachdem ein Element der Warteschlange einer Chipkarte zugeordnet worden ist, diese Chipkarte kein Signal an den Scheduler zurück gibt, welches anzeigt, dass die elektronischen Signatur für das betreffende Element der Warteschlange generiert worden ist, so wird diese Chipkarte aus der vorgegebenen Reihenfolge der Chipkarten logisch und/oder physikalisch entfernt und das dieser Chipkarte zuvor zugeordnete Element der Warteschlange wird einer anderen in der vorgegebenen Reihenfolge der Chipkarten verbleibenden Chipkarte zugeordnet, so dass die elektronischen Signatur generiert werden kann.

In einer Ausführungsform der Erfindung werden zumindest zwei verschiedene erste und zweite Warteschlangen gebildet. Beispielsweise hat ein erster Teilnehmer dem Betreiber des Computersystems seine Vollmacht für die Signierung von Dokumenten mit der elektronischen Signatur des ersten Teilnehmers erteilt. Für die Generierung von Signaturen des ersten Teilnehmers steht eine erste Menge von Chipkarten in der Massensignaturvorrichtung zur Verfügung. Die erste Warteschlange wird ausschließlich für Aufrufe der ersten Funktion, die von dem ersten Teilnehmer herrühren, gebildet. Die Zuordnung von Elementen der ersten Warteschlange durch den Scheduler erfolgt nur an Chipkarten der ersten Menge, da nur diese Chipkarten die Signaturen des ersten Teilnehmers erzeugen können.

Dagegen wird eine zweite Warteschlange für Aufrufe der ersten Funktion von mehreren verschiedenen zweiten Teilnehmern gebildet, die dem Betreiber der Computersystems Vollmacht für die Signierung von deren Dokumenten mit der elektronischen Signatur eines Dritten, das heißt z.B. der elektronischen Signatur des Betreibers des Computersystems, gegeben haben. In der Massensignaturvorrichtung steht dann eine zweite Menge von Chipkarten zur Verfügung, die zur Generierung von elektronischen Signaturen des Betreibers des Computersystems ausgebildet sind. Die Elemente der zweiten Warteschlange werden von dem Scheduler nur der zweiten Menge von Chipkarten zugeordnet, nicht aber der ersten Menge von Chipkarten.

Alternativ oder zusätzlich können auch Wartschlangen für einzelne Teilnehmer oder Gruppen von Teilnehmern gebildet werden, die bestimmte Arten von elektronischen Signaturen wünschen, wie zum Beispiel eine einfache, fortgeschrittene oder qualifizierte Massensignatur.

Die Erfindung ermöglicht ferner die Verifikation und Archivierung von Daten, die eine elektronische Signatur aufweisen. Das Computersystem empfängt von einem der Teilnehmer Daten, die eine elektronische Signatur aufweisen. Dazu ruft der Teilnehmer die entsprechende Methode auf, beispielsweise durch eine SOAP Message. Daraufhin wird die elektronische Signatur verifiziert. Der Ablauf des Verifikationsverfahrens wird in einem Prüfprotokoll festgehalten. Die Daten werden zusammen mit dem Prüfprotokoll archiviert. Optional werden die unsignierten Daten von dem Computersystem an den Teilnehmer zurück gesendet.

Vorzugsweise kann der Teilnehmer auf das archivierte Prüfprotokoll zugreifen, um sich zu vergewissern, dass die elektronische Signatur der zuvor gesendeten Daten verifiziert werden konnte. Dieser Zugriff kann auch von einem anderen hierzu autorisierten Teilnehmer durchgeführt werden. Hierzu hat das Computersystem beispielsweise ein Web-Interface, so dass auch hierzu autorisierte Dritte bequem auf die archivierten Prüfprotokolle zugreifen können.

Nach einer weiteren Ausführungsform der Erfindung können die Teilnehmer selbst auf deren Teilnehmerprofile zugreifen, beispielsweise, um diese zu aktualisieren. Dieser Zugriff kann beispielsweise über ein Web-Interface des Computersystems erfolgen. Insbesondere für den Anwendungsfall des Versendens der elektronischen Rechnungen hat dies den Vorteil, dass der Rechnungsempfänger selbst seine Stammdaten aktualisieren kann, so dass nicht der Rechnungsversender zunächst geänderte Stammdaten von seinen Rechnungsempfängern erhalten muss, um diese dann in dem Konfigurationsspeicher des Computersystems zu aktualisieren. Vorzugsweise werden jedoch durch das Computersystem keine solchen Teilnehmerprofile gespeichert, sondern sämtliche für die Erbringung eines gewünschten Dienstes erforderlichen Parameter von dem Teilnehmer dem Computersystem durch den entsprechenden Methodenaufruf, z.B. mit einer SOAP Message, übergeben. Je nach Anwendungsfall kann jedoch eine Teilmenge der Parameter auch in einem Teilnehmerprofil gespeichert sein. Es ist auch möglich, das Computersystem so zu konfigurieren, dass ein Teilnehmer optional die Dienste mit oder ohne Teilnehmerprofil in Anspruch nehmen kann.

Die vorliegende Erfindung ist besonders vorteilhaft, da sie es ermöglicht, eine Plattform zu schaffen, die eine Vielzahl von Teilnehmern für Dienste, die im Zusammenhang mit der elektronischen Signatur stehen, in Anspruch nehmen können. Das erfindungsgemäße Computersystem kann also als eine sogenannte "Hub" ausgebildet sein. Hierdurch werden die Gesamtaufwendungen für Investitionen in Computerhardware und - software bei den Teilnehmern stark reduziert, da auch insbesondere so genannte Legacy-Anwendungen mit einem erfindungsgemäßen Computersystem interoperabel sein können.

Im weiteren werden bevorzugte Ausführungsformen der Erfindung mit Bezugnahme auf die Zeichnung näher erläutert. Es zeigen:
- Figur 1: ein Blockdiagramm einer ersten Ausführungsform eines erfindungsgemäßen Computersystems,
- Figur 2: eine zweite Ausführungsform eines erfindungsgemäßen Computersystems,
- Figur 3: eine Ausführungsform eines erfindungsgemäßen Verfahrens,
- Figur 4: eine dritte Ausführungsform eines erfindungsgemäßen Computersystems,
- Figur 5: eine zweite Ausführungsform eines erfindungsgemäßen Verfahrens,
- Figur 6: ein Blockdiagramm einer Ausführungsform einer zur Durchführung eines Massensignaturverfahrens ausgebildeten Signierungskomponente,
- Figur 7: eine Ausführungsform eines erfindungsgemäßen Massensignaturverfahrens.

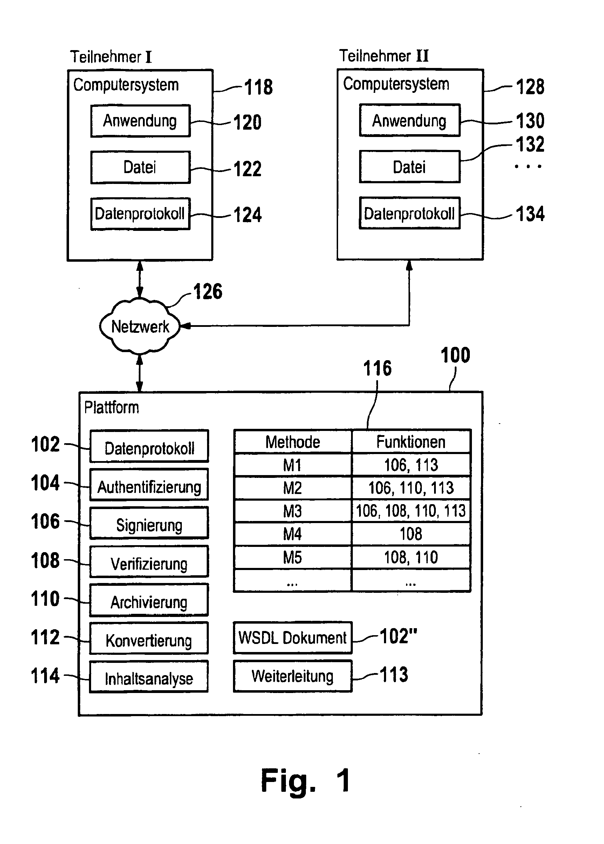

Die Figur 1 zeigt ein Computersystem 100 durch welches eine Plattform für mehrere Teilnehmer I, II, ... zur Verfügung gestellt wird. Das Computersystem 100 hat eine Kommunikationsschnittstelle 102 zur Herstellung von Kommunikationsverbindungen mit den Teilnehmern I, II, ... mit Hilfe eines Datenprotokolls, wie zum Beispiel TCP / IP. Das Computersystem 100 hat eine Authentifizierungskomponente 104 zur Authentifizierung der Teilnehmer I, II, ... gegenüber dem Computersystem 100. Die Authentifizierung erfolgt vorzugsweise unter Verwendung eines kryptographischen Protokolls, insbesondere mit dem Secure Socket Layer (SSL) V3 Protokoll.

Das Computersystem 100 hat eine Signierungskomponente 106 zur Erzeugung einer elektronischen Signatur, eine Verifizierungskomponente 108 zur Überprüfung der Echtheit einer elektronischen Signatur und eine Archivierungskomponente 110 zur Archivierung von Daten oder Dateien, wie zum Beispiel elektronischen Rechnungen, und den dazugehörigen Prüfprotokollen, die von der Verifizierungskomponente 108 generiert wurden.

Die Konvertierungskomponente 112 des Computersystems 100 dient zur Konvertierung der Formate von empfangenen Daten oder Dateien in ein von dem Computersystem 100 verwendetes Verarbeitungs-Format. Beispielsweise kann das Computersystem 100 Daten im Format EDIFACT, IDOC, CCG-ASCI und / oder andere Formate empfangen. Daten solcher Formate werden in ein einheitliches, von dem Computersystem 100 verwendetes Format konvertiert. Bei diesem von dem Computersystem 100 verwendeten Format kann es sich beispielsweise um ein Format einer Auszeichnungssprache, wie zum Beispiel ein XML-Format handeln.

Durch die Konvertierungskomponente 112 kann auch eine Konvertierung aus dem von dem Computersystem 100 verwendeten Format, also beispielsweise dem XML-Format, in verschiedene Empfänger-Formate von Teilnehmern, die Daten oder Dateien von dem Computersystem empfangen können, erfolgen. Eine solche Datenkonvertierung hat den Vorteil, dass unabhängig von den jeweils verwendeten Datenformaten der Teilnehmer ein Datenaustausch zwischen den Teilnehmern über die von dem Computersystem 100 gebildete Plattform oder "Hub" erfolgen kann.

Das Computersystem 100 hat ferner eine Weiterleitungs-Komponente 113 zur Weiterleitung von Daten, die von einem der Teilnehmer empfangen worden sind, an einen anderen der Teilnehmer über ein spezifiziertes Kommunikationsmedium, wie zum Beispiel per E-Mail. Das Computersystem 100 kann für jedes in Frage kommende Kommunikationsmedium eine separate Weiterleitungs-Komponente 113 aufweisen. Alternativ kann die Weiterleitungs-Komponente 113 verschiedene Kommunikationsmedien abdecken.

Das Computersystem 100 hat ferner eine Analyse-Komponente 114 zum Auslesen von Informationen aus den zuvor in das von dem Computersystem 100 verwendete Format konvertierten Daten oder Dateien. Ein solches Auslesen von Informationen kann für die Weiterverarbeitung oder Weiterleitung von Daten oder Dateien erforderlich sein. Die Analyse-Komponente 114 ist dabei so ausgebildet, dass sie Daten oder Dateien in dem von dem Computersystem 100 verwendeten Format verarbeiten kann. Die Formatkonvertierung durch die Konvertierungskomponente 112 hat also auch den Vorteil, dass dieselbe Analyse-Komponente 114 verwendet werden kann, um Daten oder Dateien verschiedener Teilnehmer, die unterschiedliche Datenformate verwenden, zu verarbeiten. Dies reduziert den Programmierungsaufwand für die Analyse-Komponente 114 ganz erheblich.

Durch die Signierungskomponente 106, die Verifizierungskomponente 108, die Archivierungskomponente 110 und die Konvertierungskomponente 112 werden entsprechende Grundfunktionen zur Signierung, Verifizierung, Archivierung bzw. Konvertierung implementiert. Alternativ oder zusätzlich kann das Computersystem 100 weitere Grundfunktionen im Zusammenhang mit dem elektronischen Rechtsverkehr implementieren, wie zum Beispiel eine Funktion zur Datenkompression von Dokumenten, wie zum Beispiel eine zip-Funktion.

Mit Hilfe der Konfigurationskomponente 116 werden auf der Basis dieser Grundfunktionen verschiedene Methoden definiert. Jede Methode beinhaltet dabei zumindest eine der Grundfunktionen. Eine Methode kann auch mehrere der Grundfunktionen beinhalten, die zu einem Workflow miteinander verkettet sind. Die Verkettung kann dabei sequentiell und/oder parallel erfolgen.

Beispielsweise ist eine Methode M1, die von dem Computersystem 100 zur Verfügung gestellt wird, in der Konfigurationskomponente 116 als die sequentielle Verkettung der von der Signierungskomponente 106 und der Weiterleitungs-Komponente 113 zur Verfügung gestellten Grundfunktionen definiert.

Entsprechend verhält es sich für die Methode M2, die aus einer sequentiellen Verkettung der von der Signierungskomponente 106, der Archivierungskomponente 110 und der Weiterleitungs-Komponente 113 zur Verfügung gestellten Grundfunktionen besteht. Alternativ kann die Methode M2 auch so definiert sein, dass nach Ausführung der von der Signierungskomponente 106 zur Verfügung gestellten Grundfunktionen die nachfolgenden von der Archivierungskomponente 110 bzw. der Weiterleitungs-Komponente 113 zur Verfügung gestellten Grundfunktionen parallel zueinander ablaufen. Die Konfigurationskomponente 116 beinhaltet weitere solche Definitionen für die Methoden M3, M4, M5, ..., die von dem Computersystem 100 zur Verfügung gestellt werden.

Die Komponente 116 kann durch einen Administrator gepflegt werden, um diese an die jeweiligen Erfordernisse anzupassen, um also beispielsweise zusätzliche Methoden basierend auf den vorgegebenen Grundfunktionen zu definieren und/oder existente Definitionen zu modifizieren.

Die so definierten Methoden des Computersystems 100 können über die Kommunikationsschnittstelle 102 von den Teilnehmern über das Netzwerk 126 aufgerufen werden. Die Methoden können Bestandteil des Datenprotokolls der Kommunikationsschnittstelle 102 sein oder diesem vor- oder nachgelagert sein.

Vorzugsweise ist die Kommunikationsschnittstelle 102 als Web-Service implementiert. In diesem Fall erfolgen die Methodenaufrufe der Teilnehmer über den von der Kommunikationsschnittstelle 102 zur Verfügung gestellten Web-Service, der diese Methoden beinhaltet.

Durch Aufruf bestimmter Methoden kann also ein Teilnehmer selbst festlegen, welche der von dem Computersystem 100 zur Verfügung gestellten Dienste er nutzen möchte. Beim Aufruf einer Methode übergibt der betreffende Teilnehmer typischerweise bestimmte Parameter, die die Methode zur Ausführung des entsprechenden Dienstes benötigt, wie zum Beispiel einen Parameter zur Spezifizierung eines Dateiformats, einer Kennung für die Konvertierung, eine E-Mail-Adresse für die Weiterleitung, zum Beispiel an einen Rechnungsempfänger, etc. Ferner kann mit einem Methodenaufruf eine Teilnehmerkennung des Empfängers eines Dokuments als Parameter übergeben werden, so dass die betreffenden Daten mit dieser Teilnehmerkennung archiviert werden. Der betreffende Teilnehmer kann dann die archivierten Daten mit Hilfe seiner Teilnehmerkennung durch Aufruf einer entsprechenden Methode aus dem Archiv abrufen.

Die durch das Computersystem 100 zur Verfügung gestellten Methoden und die von diesen Methoden benötigten Parameter können in einem WSDL-Dokument 102" des Web-Service beschrieben sein. Die Teilnehmer können das WSDL-Dokument 102" über das Netzwerk 126 unmittelbar von dem Web-Service, den die Kommunikationsschnittstelle 102 zur Verfügung stellt, abfragen oder von einem externen Verzeichnisserver im Wege der so genannten Discovery dieses Web-Service.

Wenn die Definition der Methoden in der Konfigurationskomponente 116 verändert wird, wenn also beispielsweise eine zusätzliche Methode aufgrund einer entsprechenden Kundenanforderung definiert wird, eine existente Methode verändert wird, oder eine andere Aktualisierung der Methoden Definitionen erfolgt, werden die entsprechenden Änderungen auch in das WSDL-Dokument 102" eingetragen.

Beispielsweise trägt der Administrator die Veränderungen der Definition der Methoden zunächst in die Konfigurationskomponente 116 ein. Wenn der Administrator ein Kommando zur Speicherung der veränderten Definitionen eingibt, werden diese Veränderungen automatisch in das WSDL-Dokument 102" eingetragen, so dass die externen Computersysteme der Teilnehmer über diese Veränderung informiert sind, und die geänderten oder zusätzlichen Methoden aufrufen können. Neben einer automatischen Aktualisierung des WSDL-Dokuments 102" kann auch eine automatische Versionierung erfolgen.

Das Computersystem 100 kann darüber hinaus eine Konfigurationsdatenbank aufweisen, in der Teilnehmerprofile abgespeichert sind. Auf jedes der Teilnehmerprofile kann mit einer Kennung ("Teilnehmer-ID") zugegriffen werden. Bei der Teilnehmer-ID handelt es sich beispielsweise um einen so genannten Primär- oder Sekundärschlüssel der Konfigurationsdatenbank 116.

In einem Teilnehmerprofil können verschiedene teilnehmerspezifische Informationen abgelegt sein, die dann nicht als Parameter bei einem Methodenaufruf übergeben werden müssen. Beispielsweise kann in einem Teilnehmerprofil festgelegt sein, welches Daten- oder Dateiformat der betreffende Teilnehmer erfordert, welches seine Teilnehmer-Adresse und / oder die von dem Teilnehmer gewünschte Art der Datenübertragung, das heißt zum Beispiel auf elektronischem Wege oder in Papierform, ist.

Die Figur 1 zeigt exemplarisch ein Computersystem 118 des Teilnehmers I. Das Computersystem 118 hat ein Anwendungsprogramm 120, wie zum Beispiel ein sogenanntes ERP-Programm. Das Anwendungsprogramm 120 kann eine Datei 122 generieren. Bei der Datei 122 kann es sich beispielsweise um eine elektronische Rechnung im Format EDIFACT handeln. Das Computersystem 118 hat ferner eine Kommunikationsschnittstelle 124, durch die ein Datenprotokoll realisiert wird, um über ein Netzwerk 126 mit dem Computersystem 100 Kommunikationsverbindungen aufbauen zu können. Bei dem Netzwerk 126 kann es sich zum Beispiel um ein öffentliches Netzwerk, wie zum Beispiel das Internet, oder ein anderes Computer- und / oder Telekommunikationsnetzwerk handeln.

Das Computersystem 128 des Teilnehmers II hat ein Anwendungsprogramm 130; hierbei kann es sich ebenfalls um ein ERP-Anwendungsprogramm, ein Buchhaltungsprogramm oder dergleichen handeln.

Das Anwendungsprogramm 130 dient zur Verarbeitung einer Datei 132, die über eine Kommunikationsschnittstelle 134 empfangen worden ist. Die Kommunikationsschnittstelle 134 realisiert ein Datenprotokoll zum Aufbau von Kommunikationsverbindungen mit dem Computersystem 100.

Die Kommunikationsschnittstellen 124, 134,... der Teilnehmer sind so ausgebildet, dass über das Netzwerk 126 die von dem Computersystem 100 zur Verfügung gestellten Methoden aufgerufen werden können. Vorzugsweise entsprechen die von den Kommunikationsschnittstellen 124, 134,...implementierten Datenprotokolle einem W3C Standard oder einem anderen Internet-Standard. Insbesondere sind die Kommunikationsschnittstellen 124, 134,... zur Kommunikation über SOAP Messages ausgebildet, um Funktionsaufrufe des Web-Services der Kommunikationsschnittstelle 102 auszuführen und entsprechende Parameter und Daten bzw. Dateien zu übergeben oder zu empfangen.

Die mit der Datei 122 durchzuführenden Aktionen legt der Teilnehmer I durch den Aufruf einer der Methoden des Computersystems 100 selbst fest. Die notwendigen Informationen z.B. die Daten des Empfangsteilnehmers, das heißt beispielsweise des Teilnehmers II, werden als Parameter an die aufgerufene Methode übergeben. Bei diesem Vorgehen sind die Teilnehmer absolut flexibel, da sie jedem Aufruf individuelle Parameter übergeben können.

Zur Verwendung der von dem Computersystem 100 zur Verfügung gestellten Dienste baut der Teilnehmer I mit seinem Computersystem 118 über die Kommunikationsschnittstelle 124 eine Kommunikationsverbindung über das Netzwerk 126 mit dem Computersystem 100, das heißt dessen Kommunikationsschnittstelle 102 auf. Hierüber erfolgt mit Hilfe der Authentifizierungskomponente 104 des Computersystems 100 die Authentifizierung des Teilnehmers I, beispielsweise nach dem SSLV3 Protokoll oder einem anderen Protokoll oder Zugriffsverfahren. Der Zugriff erfolg z.B. zertifikatsbasiert über HTTPS. Nach der erfolgreichen Authentifizierung des Teilnehmers I kann dieser einen Funktionsaufruf der gewünschten Methode an den Web-Service des Computersystems 100 richten.

Aufgrund der Authentifizierung ist der Teilnehmer I gegenüber dem Computersystem 100 identifiziert. Wenn Teilnehmer I eine Methode aufgerufen hat, die eine Konvertierung beinhaltet, wird das Computersystem 100 sobald es die Datei 122 von dem Teilnehmer I empfängt, die Datei 122 durch die Konvertierungskomponente 112 in das von dem Computersystem 100 verwendete Format, beispielsweise ein kanonisches XML-Format konvertieren. Die in das von dem Computersystem 100 verwendete Format konvertierte Datei 122 wird dann durch die Analyse-Komponente 114 einer inhaltlichen Analyse unterzogen; in dem hier betrachteten Beispielsfall wird durch die inhaltliche Analyse die Kennung des Teilnehmers ermittelt, der die Datei von dem Teilnehmer I empfangen soll, also zum Beispiel dessen sog. International Location Number ILN.

Bei einer Ausführungsform des Computersystems mit einer Konfigurationsdatenbank für die Teilnehmer, kann das Computersystem aufgrund der Authentifizierung und der damit einhergehenden Identifizierung des Teilnehmers I gegenüber dem Computersystem 100 auf das Teilnehmerprofil des Teilnehmers I in der Konfigurationsdatenbank zugreifen, um von dort Parameter für die Durchführung der aufgerufenen Methode abzurufen.

Die in das von dem Computersystem 100 verwendete Format konvertierte Datei 122 wird dann von der Konvertierungskomponente 112 in das in dem Teilnehmerprofil des Teilnehmers II spezifizierte Format konvertiert. Das gewünschte Format kann durch eine eindeutige Kennung spezifiziert sein. Diese Kennung kann in einer vorausgegangen kundenindividuellen Anpassung, dem sog. Customizing, festgelegt worden sein. Die in das Format des Teilnehmers II konvertierte Datei 122 wird dann durch die Signierungskomponente 106 elektronisch signiert.

Dies kann so erfolgen, dass die elektronische Signierung zum Beispiel in einem sogenannten Massensignaturverfahren durch den Betreiber der Plattform 100 erfolgt, wenn der Teilnehmers I die hierzu erforderliche Vollmacht erteilt hat.

Nach Empfang der signierten Datei 122, welche in dem hier betrachteten Beispielsfall gleich der Datei 132 ist, kann das Computersystem 128 beispielsweise mittels des Anwendungsprogramms 130 die Datei 132 weiterverarbeiten. Hierzu ist es typischerweise erforderlich, das von dem Teilnehmer II die Echtheit der elektronisch signierten Datei 132 überprüft wird. Zur Überprüfung der Echtheit der elektronisch signierten Datei 132 konnektiert der Teilnehmer II sein Computersystem 128 über das Netzwerk 126 mit dem Computersystem 100. Danach wird der Teilnehmer II mit Hilfe der Authentifizierungskomponente 104 gegenüber dem Computersystem 100 authentifiziert. Wenn der Teilnehmer II die Verifizierung der von Teilnehmer I gesendeten Dateien wünscht, ruft er die entsprechende Methode M4 dafür auf. Falls er außer der Verifizierung auch die Archivierung der signierten Datei und der zugehörigen Verifikationsprotokolle wünscht, ruft er beispielsweise die Methode M5 auf, die außer der Verifikation auch die Archivierung durchführt. Die Anschlussverifikation durch das Computersystem hat eine erhebliche Vereinfachung des Workflows zur Folge, da der Teilnehmer II nicht selbst die Verifikation vornehmen muss.

Der Teilnehmer II sendet dann von dem Computersystem 128 die signierte Datei 132 über das Netzwerk 126 an das Computersystem 100. Durch die Verifizierungskomponente 108 wird dann eine Überprüfung der Echtheit der elektronischen Signatur der Datei 132 vorgenommen und ein entsprechendes Prüfprotokoll generiert. Die Datei 132 wird zusammen mit dem Prüfprotokoll entsprechend den beim Methodenaufruf der Methode M5 übergebenen Parametern des Teilnehmers II durch die Archivierungskomponente 110 archiviert. Das Ergebnis der Überprüfung der elektronischen Signatur der Datei 132 kann von dem Computersystem 100 über das Netzwerk 126 an den Teilnehmer II kommuniziert werden oder an einen anderen hierzu autorisierten Teilnehmer. Vor der Archivierung der Datei 132 wird diese vorzugsweise durch die Konvertierungskomponente 112 in das von dem Computersystem 100 verwendete Datenformat konvertiert.

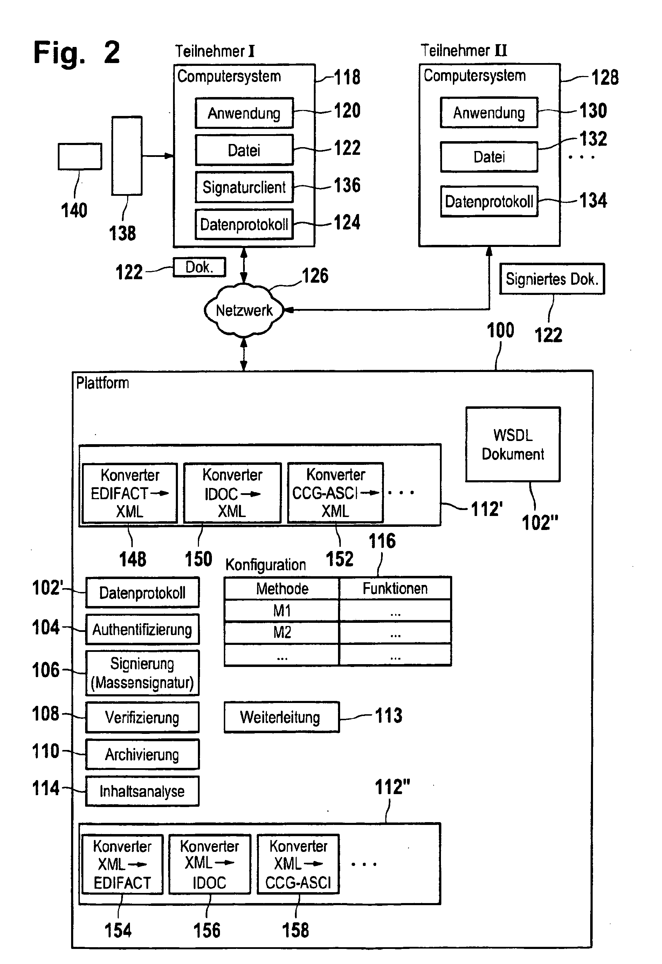

Die Figur 2 zeigt eine weitere Ausführungsform. Elemente der Figur 2, die Elementen der Figur 1 entsprechen, sind mit denselben Bezugszeichen gekennzeichnet.

In dem hier betrachteten Ausführungsbeispiel verfügt das Computersystem 118 über einen Signatur-Client 136 zur Vornahme elektronischer Signaturen. Hierzu ist ein Chipkartenlesegerät 138 an das Computersystem 118 angeschlossen. Auf einer Chipkarte 140 ist der private Schlüssel des Teilnehmers I für die Vornahme einer elektronischen Signatur durch den Signatur-Client 136 gespeichert. Beispielsweise ist der private Schlüssel als Teil einer sogenannten PSE (Personal Security Environment) auf der Chipkarte 140 gespeichert. Neben dem privaten Schlüssel gehören zu der PSE unter anderem das sogenannte Zertifikat. Alternativ kann das PSE als verschlüsselte Datei in dem Computersystem 118 gespeichert werden. Die Verwendung des PSE ist typischerweise durch ein Passwort geschützt.

Die Signierungskomponente 106 des Computersystems 100 ist für die Durchführung eines sogenannten Massensignaturverfahrens, das heißt der automatisierten Signierung ausgebildet. Hierzu hat die Signierungskomponente 106 ein sogenanntes Chipkarten-Rack zur Aufnahme einer größeren Anzahl parallel arbeitender Chipkarten, um eine hohen Durchsatz zu ermöglichen. Bei einem Chipkarten-basierten Massensignaturverfahren sind die Chipkarten so ausgebildet, dass nach einmaliger korrekter Eingabe der PIN eine beliebige Anzahl von elektronischen Signaturen automatisiert durchgeführt werden können. Massensignaturverfahren sind als solche aus dem Stand der Technik bekannt, vgl. hierzu zum Beispiel "Aspekte der Massensignatur", Detlef Pühnlein, Yvonne Knosowski (http://www.secunet.de/download/fachartikel/dach2003_aspekte-der-massensignatur.pdf).

In dem hier betrachteten Ausführungsbeispiel wird als Datenprotokoll für die Kommunikation zwischen dem Computersystem 100 und den Computersystemen 118, 128, ... das TCP / IP Protokoll verwendet, wie zum Beispiel HTTPS über Port 443.

In dem hier betrachteten Ausführungsbeispiel beinhaltet die Konvertierungskomponente 112 (vgl. Fig. 1) zwei Konvertergruppen 112' und 112". Die Konvertergruppe 112' beinhaltet die Konverter 148, 150, 152, ... Jeder dieser Konverter der Konvertergruppe 112' dient zur Konvertierung eines Sender-Formats, das heißt eines von einem der Teilnehmer I, II, ... empfangenen Daten- oder Dateiformats, in ein von dem Computersystem 100 verwendetes Format. Bei dem von dem Computersystem 100 verwendeten Format handelt es sich vorzugsweise um das Format einer Auszeichnungssprache, insbesondere um ein XML-Format.

Beispielsweise dient der Konverter 148 zur Konvertierung eines EDIFACT Sender-Formats, in das XML-Format des Computersystems 100, der Konverter 150 zur Konvertierung eines IDOC Sender-Formats in XML, der Konverter 152 zur Konvertierung eines CCG-ASCI Sender-Formats in XML, usw. Zu beachten ist hierbei, dass es insbesondere bei IDOC kundenspezifische Dialekte gibt. Wenn solche Dialekte verwendet werden soll, muss für jeden dieser Dialekte in der Phase der kundenindividuellen Anpassung ein eigener Konverter entwickelt werden. Jeder dieser Konverter erhält seine eigene, eindeutige Kennung. Entsprechend muss mit verschiedenen Dialekten anderer Formate (z.B. EDIFACT) verfahren werden.

Jedem der Konverter 148, 150, 152, ... der Konvertergruppe 112' ist dabei eine feste Kennung zugeordnet. Die Kennung legt fest, um welches Format es sich handelt. Die Kennung wird als Parameter der entsprechenden Konvertierungsmethode an das Computersystem 100 übergeben. Die empfangenen Daten werden mit dem durch die Kennung festgelegten Konverter jeweils in das XML-Format (kanonisches XML) des Computersystems 100 umgewandelt.

Die Konvertergruppe 112" beinhaltet mehrere Konverter 154, 156, 158, ... In dem hier betrachteten Ausführungsbeispiel dient der Konverter 154 zur Konvertierung aus dem XML-Format des Computersystems 100 in EDIFACT, der Konverter 156 zur Konvertierung aus dem XML-Format in das IDOC-Format, der Konverter 158 zur Konvertierung aus dem XML-Format in CCG-ASCI, etc. Im Allgemeinen kann die Konvertergruppe 112' eine Anzahl von n Konvertern zur Konvertierung von n Sender-Formaten in das Verarbeitungsformat des Computersystems 100 beinhalten und die Konvertergruppe 112" eine Anzahl m Konvertern zur Konvertierung aus dem Verarbeitungsformat in m Empfänger-Formate. Dabei kann n < m, n = m oder auch n > m sein.

Auch die Formatkonvertierung wird vorzugsweise also durch einen Methodenaufruf einer entsprechenden Formatierungsmethode initiiert. Dabei wird die Kennung des gewünschten Konverters beim Methodenaufruf als Parameter übergeben.

Teilnehmer I legt beispielsweise mit Hilfe der aufgerufenen Methode fest, dass ein von dem Teilnehmer I empfangenes elektronisches Dokument zu signieren ist und an einen in dem elektronischen Dokument bzw. in den Parametern der Methode angegebenen Empfänger weiterzuleiten ist. Ferner kann in den Parametern der aufgerufenen Methode die Art der elektronischen Signierung angeben werden. Das von dem Teilnehmer II geforderte Empfänger-Format und die Empfänger-Adresse des Teilnehmers II wird ebenfalls in den Parametern der aufgerufenen Methode festgelegt. Mit Hilfe der Kennung des Empfänger-Formats wird der entsprechende Konverter für die Durchführung der Konvertierungsmethode ausgewählt.

Die Kommunikation der Teilnehmer I, II, ... mit dem Computersystem 100 erfolgt mittels eines von der Kommunikationsschnittstelle zur Verfügung gestellten Datenprotokolls 102', wie z.B. SOAP.

Eine von der Anwendung 120 des Computersystems 118 generierte Datei 122 beinhaltet ein elektronisches Dokument, wie zum Beispiel eine elektronische Rechnung. Wenn es sich bei der Anwendung 120 um ein SAP-System handelt, so wird die Datei 122 typischerweise im Format IDOC generiert. Die Versendung der Datei in dem IDOC-Format erfolgt über den Aufruf der entsprechenden Methode (Konvertierung) unter Angabe der entsprechenden Kennung zur Konvertierung, des in der Phase der individuellen Anpassung ermittelten IDOC-Formats. Die Kennung wird als Parameter der Methode (Konvertierung) mitgegeben. Entsprechend verhält es sich für die Konvertierungsaufträge der weiteren Teilnehmer, für die ebenfalls in der Phase der individuellen Anpassung Konverter mit entsprechender Kennung erstellt wurden.

Die Datei 122 wird also durch den Web-Service des Computersystems 100 über einen Methodenaufruf empfangen und an den Konverter 150 weitergeleitet, durch den eine Konvertierung des IDOC-Formats in XML erfolgt. Außerdem ist eine Authentifizierung des Teilnehmers I gegenüber dem Computersystem 100 erforderlich, welche durch die Authentifizierungskomponente 104 durchgeführt wird.

Aus der aufgerufenen Methode und den mitgegebenen Parametern ergibt sich, dass der Teilnehmer I eine Konvertierung in ein Empfängerformat mit anschließender elektronischer Signierung der Datei 122 und deren Weiterleitung an einen in der Datei 122 bzw. in den Parametern identifizierten Teilnehmer wünscht.

Daraufhin wird in einer Ausführung des Computersystems die Analyse-Komponente 114 gestartet, um eine Empfänger-Kennung aus der Datei 122 auszulesen, wie zum Beispiel die ILN des Teilnehmers, der die signierte Datei empfangen soll. Die XML konvertierte Datei 122 wird daraufhin von einem der Konverter 154, 156, 158, ... der Konvertergruppe 112" in das Empfänger-Format konvertiert. Verlangt der Empfänger - also zum Beispiel der Teilnehmer II - das Format EDIFACT, so wird die Konvertierung z.B. von dem Konverter 154 vorgenommen, welcher dem EDIFACT-Dialekt des Kunden entspricht.

Die in das Empfänger-Format konvertierte Datei 122 wird sodann elektronisch signiert. Dies erfolgt durch das Computersystem 100 mittels der Signierungskomponente 106 in einem Massensignaturverfahren.

Das Computersystem 100 kann mehrere TCP / IP-Ports 142, 144, 146, ... aufweisen. In einer Ausführungsform der Erfindung ist jedem der TCP / IP-Ports ist eine Portnummer zugeordnet. Zum Beispiel hat der TCP / IP-Port 142 die Portnummer A, der TCP / IP-Port 144 die Portnummer B, der TCP / IP-Port 146 die Portnummer C etc.

Beispielsweise liegen die Portnummern A, B, C, ... in einem Nummernraum, der nicht die allgemein üblichen Portnummern beinhaltet. Allgemein übliche Portnummern sind zum Beispiel Portnummer 23 für Telnet, Portnummer 25 für SMTP, Portnummer 80 für HTTP, Portnummer 443 für HTTPS, Portnummer 3389 für MSRemote Desktop / Terminal Services, Portnummer 5631 und 5632 für pcAnywhere. Beispielsweise haben die Portnummern A, B, C, ... mindestens fünf Stellen und werden von der Portnummer 50.000 ab aufsteigend vergeben. Neben den TCP / IP-Ports 142, 144, 146, ... aus diesem noch nicht belegten Portnummernraum kann das Computersystem 100 weitere übliche Ports, wie zum Beispiel einen Port 80 für HTTP und einen Port 443 für HTTPS Kommunikation aufweisen.

In der hier betrachteten Ausführungsform ist jeder der Konverter 148, 150, 152, ... der Konvertergruppe 112' fest einem der TCP / IP-Ports 142, 144, 146, ... zugeordnet. Insbesondere ist der Konverter 148 dem TCP / IP-Port 142 zugeordnet, der Konverter 150 dem TCP / IP-Port 144 und der Konverter 152 dem TCP / IP-Port 146, usw. Der TCP / IP-Port 142 dient also zum Empfang von EDIFACT-Dokumenten, die dann von dem TCP / IP-Port 142 zugeordnetem Konverter 148 automatisch in das XML-Format des Computersystems 100 umgewandelt werden. Entsprechend dient der TCP / IP-Port 144 zum Empfang von IDOC-Dokumenten, die dann automatisch in XML umgewandelt werden, der Port 146 zum Empfang von CCG-ASCI-Dokumenten, die ebenfalls automatisch in das XML-Format umgewandelt werden, etc.

Für den Teilnehmer II kann ein Empfänger-Profil in der Konfigurationsdatenbank 116 gespeichert, auf das mit der Kennung des Teilnehmers II, das heißt mit dessen "Empfänger-ID" als Schlüssel zugegriffen werden kann. Das Empfängerprofil des Teilnehmers II legt das von dem Teilnehmer II geforderte Empfänger-Format und die Empfänger-Adresse des Teilnehmers II fest.

Die Kommunikation der Teilnehmer I, II, mit dem Computersystem 100 erfolgt mittels eines von der Kommunikationsschnittstelle zur Verfügung gestellten Datenprotokolls 102', über das die Methoden M1, M2, M3,... aufgerufen werden können..

Die Kommunikationsschnittstelle 124 des Computersystems 118 ist hier so konfiguriert, dass die Versendung der Datei 122 an den dem IDOC-Format zugeordneten Port des Computersystems 100 erfolgt, das heißt an den TCP / IP-Port 144 mit der Portnummer B. Entsprechend verhält es sich für die Kommunikationsschnittstellen der weiteren Teilnehmer, die jeweils so konfiguriert sind, dass eine Versendung einer Datei an das Computersystem 100 an denjenigen Port des Computersystems 100 erfolgt, der dem jeweiligen Sender-Format zugeordnet ist.

Die Datei 122 wird also von dem TCP / IP-Port 144 des Computersystems 100 empfangen und an den Konverter 150 weitergeleitet, durch den eine Konvertierung des IDOC-Formats in XML erfolgt.

In einer Ausführungsform des Computersystems wird dann die Analyse-Komponente 114 gestartet, um eine Empfänger-Kennung aus der Datei 122 auszulesen, wie zum Beispiel die ILN des Teilnehmers, der die signierte Datei empfangen soll. Mit der so erhaltenen Empfänger-Kennung wird auf das Empfänger-Profil des Teilnehmers in der Konfigurationsdatenbank 116 zugegriffen, der die signierte Datei 122 erhalten soll. Dort ist das von dem Empfänger geforderte Empfänger-Format angegeben. Die XML konvertierte Datei 122 wird daraufhin von einem der Konverter 154, 156, 158, ... der Konvertergruppe 112" in das Empfänger-Format konvertiert. Verlangt der Empfänger - also zum Beispiel der Teilnehmer II - das Format EDIFACT, so wird die Konvertierung von dem Konverter 154 vorgenommen.

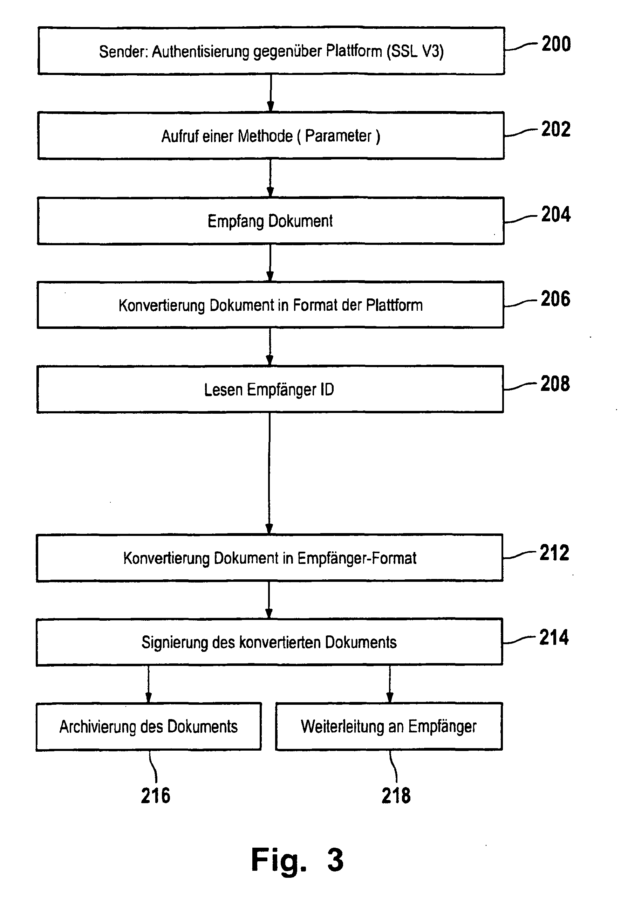

Die Figur 3 zeigt ein entsprechendes Flussdiagramm, wobei die Art der Konvertierung über die Methodenaufrufe und nicht die Ports von den Teilnehmern ausgewählt wird.

In dem Schritt 200 erfolgt eine Authentisierung eines der Teilnehmer, zum Beispiel des Teilnehmers I, der als Sender fungiert, gegenüber der von dem Computersystem 100 (vgl. Figuren 1 und 2) zur Verfügung gestellten Plattform. Vorzugsweise erfolgt die Authentisierung mit dem SSLV3Protokoll (zertifikatsbasiert, HTTPS).

In dem Schritt 202 erfolgt der Aufruf der gewünschten Methode durch den Teilnehmer I. Mit dem Aufruf der entsprechenden Methode und den übergebenen Parametern legt der Teilnehmer I beispielsweise fest, dass das empfangene Dokument signiert, an einen Empfänger weitergeleitet und archiviert werden soll (Methode M1 - vgl. Fig. 1, 2 und 4).

In dem Schritt 204 wird ein Dokument von dem Teilnehmer I empfangen. In dem Schritt 206 wird dieses in das Format der Plattform, d.h. dem Verarbeitungs-Format, konvertiert. In dem Schritt 208 wird aus den mitgegebenen Parametern eine Empfänger-Kennung "Empfänger-ID" gelesen. Das vom Empfänger festgelegte Empfänger-Format und die Empfänger-Adresse gehen aus den beim Aufruf der Methode übergebenen Parametern hervor (d.h. Schritt 210 entfällt). Das Dokument wird dann in dem Schritt 212 in das Empfänger-Format konvertiert und in dem Schritt 214 erfolgt die elektronische Signierung des konvertierten Dokuments, entweder in einem Massensignaturverfahren durch die Plattform oder nach Rückübertragung des konvertierten Dokuments durch den Teilnehmer I selbst.

In dem Schritt 216 wird das Dokument für den Teilnehmer I archiviert. Dies kann in dem Sender-Format des Teilnehmers I, in dem Empfänger-Format des Teilnehmers II oder in dem XML-Format der Plattform erfolgen. Die Archivierung kann in dem Format der Plattform erfolgen oder in einem anderen, von dem betreffenden Teilnehmer gewünschten Format. Praktischerweise sollte es das Format sein, in dem das gültige, d.h. das signierte Rechnungsdokument vorliegt; dazu wird dann gleichzeitig das Prüfprotokoll archiviert.

In dem Schritt 218 wird das konvertierte und signierte Dokument an den Empfänger, das heißt zum Beispiel den Teilnehmer II, weitergeleitet. Je nach der Definition der aufgerufenen Methode kann vor der Archivierung oder Weiterleitung eine Kompression der Daten erfolgen.

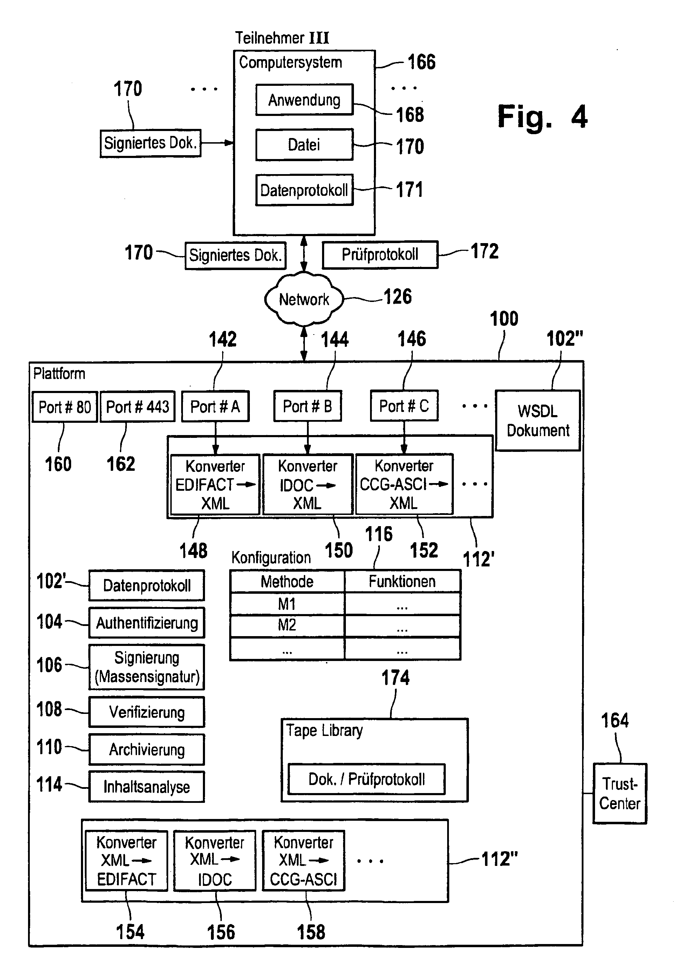

Die Figur 4 zeigt eine weitere Ausführungsform des Computersystems. Elemente der Figur 4, die Elementen der Figuren 1 und 2 entsprechen, sind mit denselben Bezugszeichen gekennzeichnet. Das Computersystem 100 in der Ausführungsform der Figur 4 hat neben den TCP / IP-Ports 142, 144, 146,... , die jeweils einem bestimmten Sender-Format zugeordnet sind, die Standard-Ports 160 und 162 mit den Portnummern 80 bzw. 443 für die HTTP bzw. HTTPS Datenprotokolle.

Das Computersystem 100 ist mit einem sogenannten Trust-Center 164 verbunden oder beinhaltet ein solches. Bei dem Trust-Center 164 handelt es sich um eine Zertifizierungsstelle, beispielsweise nach dem Signaturgesetz der Bundesrepublik Deutschland. Mit Hilfe des Trust-Centers 164 kann überprüft werden, ob das mit einer elektronischen Signatur übertragene Zertifikat gültig ist oder nicht.

Die Figur 4 zeigt ein Computersystem 166 eines Teilnehmers III. Das Computersystem 166 hat ein Anwendungsprogramm 168 und eine Kommunikationsschnittstelle 172, die ein Datenprotokoll ausführen kann, wie zum Beispiel HTTP oder HTTPS. Durch das Computersystem 166 kann ein signiertes Dokument 170 empfangen werden, welches von der Anwendung 168 als Datei gespeichert wird.

Zur Überprüfung der elektronischen Signatur des signierten Dokuments 170 bedient sich der Teilnehmer III des Computersystems 100. Hierzu wird zwischen dem Computersystem 166 und dem Computersystem 100 über das Netzwerk 126 eine Verbindung aufgebaut, beispielsweise mittels HTTP oder HTTPS, das heißt mit dem Port 160 bzw. dem Port 162 des Computersystems 100. Hierüber wird der Teilnehmer III zunächst authentifiziert. Nach Identifizierung und Authentifizierung des Teilnehmers III kann der Teilnehmer III durch Aufruf einer gewünschten Methode, beispielsweise der Methode M5, mit Übergabe der erforderlichen Parameter ein signiertes Dokument an das Computersystem 100 senden, um das Dokument hinsichtlich seiner Signatur zu prüfen und das empfangene Dokument zusammen mit dem bei der Überprüfung der elektronischen Signatur generierten Prüfprotokoll zu archivieren.

Nachdem das Computersystem 100 das signierte Dokument 170 von dem Teilnehmer III empfangen hat, erfolgt eine Überprüfung der Echtheit und der Gültigkeit der elektronischen Signatur mit Hilfe der Verifizierungskomponente 108, die hierzu auch auf das Trust-Center 164 zugreift, um die Gültigkeit des zu der elektronischen Signatur gehörenden Zertifikats zu überprüfen. Hierbei wird ein Prüfprotokoll erstellt.

Das signierte Dokument 170 und / oder das unsignierte Dokument 172 werden zusammen mit dem bei der Verifizierung generierten Prüfprotokoll durch die Archivierungskomponente 110 archiviert. Beispielsweise wird hierzu eine sogenannte Tape Library 174 des Computersystems 100 verwendet oder ein anderes, für die Archivierung geeignetes Speichermedium.

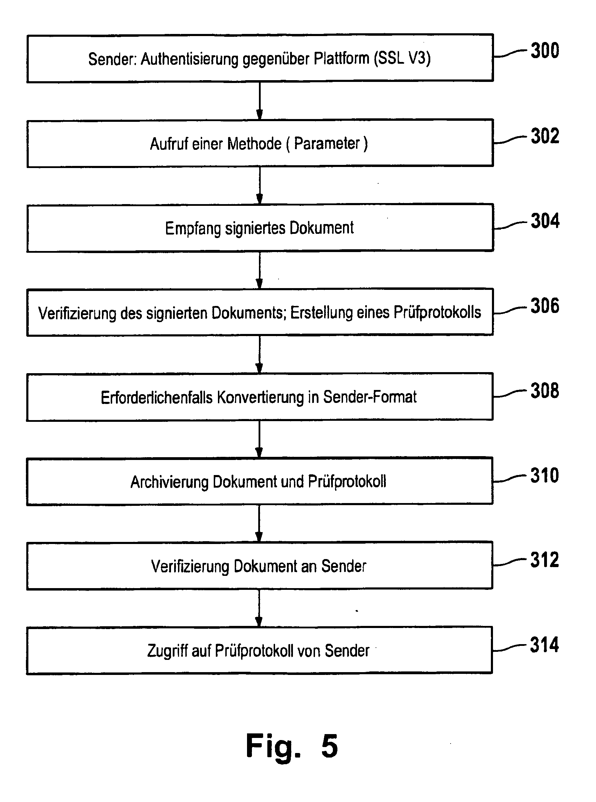

Die Figur 5 zeigt ein entsprechendes Flussdiagramm.

In dem Schritt 300 erfolgt die Authentisierung des Teilnehmers III, das heißt des Senders des signierten Dokuments, gegenüber der Plattform. Die von dem Teilnehmer III aufgerufene Methode ist beispielsweise so in der Konfigurationskomponente 116 (vgl. Fig. 1, 2 und 4) definiert, dass die von dem Teilnehmer III empfangenen Daten zu verifizieren und zu archivieren sind. In dem Schritt 304 wird ein signiertes Dokument von dem Teilnehmer III von der Plattform empfangen. In dem Schritt 306 erfolgt eine Verifikation der elektronischen Signatur des Dokuments und die Erstellung eines entsprechenden Prüfprotokolls. Nach der Überprüfung kann eine Konvertierung in ein von dem Teilnehmer III gewünschtes Format erfolgen, wenn diese Funktion zur Definition der aufgerufenen Methode gehört. Das von dem Teilnehmer III gewünschtes Format kann in Form einer Kennung als Parameter bei dem Aufruf der Methode von dem Teilnehmer III an das Computersystem bzw. dessen Web-Service übergeben werden.

Hierzu kann einer der Konverter der Konvertergruppe 112" (vgl. Figur 4) eingesetzt werden, um ein in das gewünschte Format konvertiertes Dokument 172 (vgl. ebenfalls Figur 4) zu erzeugen. In dem Schritt 310 wird das Dokument und sein dazugehöriges Prüfprotokoll archiviert und das verifizierte Dokument in dem Schritt 312 erforderlichenfalls nach Konvertierung an den Teilnehmer III übertragen. In dem Schritt 314 kann der Teilnehmer III zum Beispiel über das Web-Interface der Plattform auf das archivierte Prüfprotokoll zugreifen. Ein solcher Zugriff auf das Prüfprotokoll kann auch durch andere hierzu autorisierte Teilnehmer erfolgen.

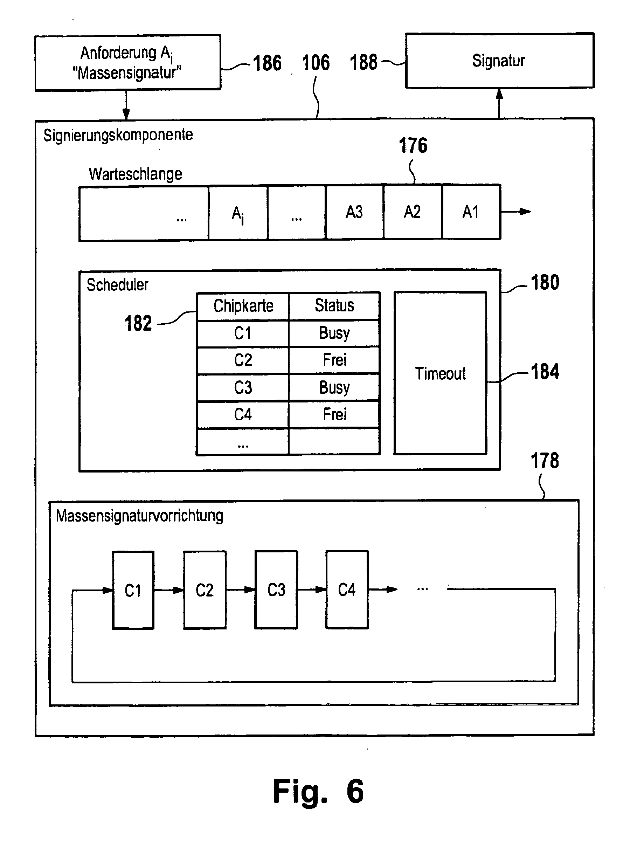

Die Figur 6 zeigt ein Blockdiagramm einer Ausführungsform einer Signierungskomponente 106, wie sie beispielsweise in den Ausführungsformen der Figur 1, 2 und 4 zur Anwendung kommen kann. Die Signierungskomponente kann eine oder mehrere Warteschlangen bilden, wie zum Beispiel die in der Figur 6 gezeigte Warteschlange 176. Die Warteschlange 176 arbeitet beispielsweise nach dem First-In First-Out (FIFO)-Prinzip.

Die Signierungskomponente 106 beinhaltet ferner eine Massensignaturvorrichtung 178, die beispielsweise ein Chipkarten-Rack aufweist. Die Massensignaturvorrichtung 178 dient zur Aufnahme von beispielsweise einer Anzahl von n Chipkarten Cj mit 0 < j ≤ n. Durch die fortlaufende Nummer j der Chipkarten ist in dem hier betrachteten Ausführungsbeispiel eine Reihenfolge der Chipkarten logisch definiert.

Die Signierungskomponente 106 hat ferner einen Scheduler 180 zur Zuordnung von Elementen der Warteschlange 176 an die Chipkarten Cj der Massensignaturvorrichtung 178. Diese Zuordnung kann zur dynamischen Lastverteilung zwischen den Chipkarten durchgeführt werden.

Der Scheduler 180 hat Zugriff auf Statusdaten 182 der Chipkarten. Jeder der Chipkarten, die Elemente der Warteschlange 176 verarbeiten können, ist mit Hilfe der Statusdaten 182 ein Status zugeordnet, und zwar entweder ein erster Status "frei" oder ein zweiter Status "busy".

Der erste Status "frei" gibt an, dass die betreffende Chipkarte zum Empfang eines Chipkartenkommandos zur Generierung einer elektronischen Signatur für ein Element der Wartschlange 176 bereit ist. Der einer Chipkarte zugeordnete Status "busy" zeigt dagegen an, dass die betreffende Chipkarte nicht zum Empfang eines Chipkartenkommandos mit der Anforderung zur Generierung einer elektronischen Signatur für ein Element der Warteschlange bereit ist, was daran liegen kann, dass die betreffende Chipkarte gerade mit der Generierung einer solchen elektronischen Signatur für ein zuvor dieser Chipkarte zugeordnetes Element der Warteschlange beschäftigt ist.

Zu dem hier beispielsweise betrachteten Zeitpunkt hat die Chipkarte C1 den Status "busy", die Chipkarte C2 den Status "frei", die Chipkarte C3 den Status "busy", die Chipkarte C4 den Status "frei", ...

Der Scheduler 180 kann eine Timeout-Komponente 184 aufweisen. Nachdem der Scheduler 180 ein Element der Warteschlange einer der Chipkarten zugeordnet hat und ein entsprechendes Chipkartenkommando an die betreffende Chipkarte gerichtet hat, wird ein Timer der Timeout-Komponente 184 gestartet. Nachdem die Chipkarte das Chipkartenkommando ausgeführt hat, das heißt, nachdem die elektronische Signatur generiert worden ist, antwortet die betreffende Chipkarte mit der Ausgabe der angeforderten elektronischen Signatur. Hierdurch wird der Timer gestoppt.

Wenn der Timerwert aber einen vorgegebenen Schwellwert erreicht, welcher über der typischerweise von der Chipkarte benötigten Zeit für die Generierung einer elektronischen Signatur liegt, so geht der Scheduler 180 davon aus, dass die betreffende Chipkarte zumindest temporär nicht für die Generierung elektronischer Signaturen zur Verfügung steht, weil zum Beispiel ein technischer Defekt vorliegt. Die betreffende Chipkarte wird dann aus der vorgegebenen Reihenfolge von Chipkarten zumindest logisch entfernt, so dass sie grundsätzlich nicht mehr für die Zuordnung von Elementen der Warteschlange 176 zur Verfügung steht. Dies kann dadurch erfolgen, dass die betreffende Chipkarte permanent auf den Status "busy" gesetzt wird.

In einem solchen Fall, wenn also der Timer einen vorgegebenen Schwellwert erreicht, ordnet der Scheduler 180 das zuvor dieser Chipkarte zugeordnete Element der Warteschlange erneut einer anderen Chipkarte zu, welche in der vorgegebenen Reihenfolge beinhaltet ist, die also nicht einen temporären oder permanenten "busy"-Status aufweist.

Im Betrieb empfängt die Signierungskomponente 106 eine Anforderung 186 Ai zur Generierung einer elektronischen Signatur für ein Dokument eines der Teilnehmer. Die Anforderung Ai stellt also einen Aufruf der ersten Funktion, das heißt der Signaturfunktion, dar. Die Anforderung Ai wird als das letzte Element an die Warteschlange 176 angehängt. Sobald die der Anforderung Ai vorhergehenden Elemente der Warteschlange 176, d.h. die Elemente A1, A2, A3, ... abgearbeitet worden sind, wird die Anforderung Ail von dem Scheduler 180 einer der Chipkarten, die gegenwärtig den Status "frei" hat, zugeordnet.

Dies erfolgt vorzugsweise in der vorgegebenen Reihenfolge der Chipkarten, das heißt die Anforderung Ai wird in dem der Figur 6 dargestellten Zeitpunkt der Chipkarte C2 zugeordnet, da es sich hier um eine freie Chipkarte mit dem kleinsten Index j=2 handelt. Der Scheduler 180 sendet daraufhin ein Chipkartenkommando an die Chipkarte C2 zur Generierung einer elektronischen Signatur entsprechend der Anforderung Ai. Gleichzeitig wird der Status der Chipkarte C2 in den Statusdaten 182 aktualisiert, nämlich von "frei" auf "busy" gesetzt. Ferner wird ein Timer der Timeout-Komponente 184 für die Chipkarte C2 gestartet.

Wenn die Chipkarte C2 normal funktioniert, gibt sie innerhalb eines Zeitraums von beispielsweise ca. einer Sekunde die gewünschte elektronische Signatur 188 aus, die von der Signierungskomponente 106 an das Computersystem 100 ausgegeben wird. Wenn hingegen die Chipkarte C2 auf das Chipkartenkommando nicht innerhalb des durch die Timeout-Komponente 184 vorgegebenen Zeitraums - von beispielsweise 1,5 Sekunden - mit der Ausgabe der elektronischen Signatur 188 antwortet, geht der Scheduler 180 davon aus, dass die Chipkarte C2 zumindest temporär nicht zur Verfügung steht, so dass der Status der Chipkarte C2 auf "busy" bleibt und die Anforderung Al einer anderen Chipkarte, die gegenwärtig den Status "frei" aufweist, für die Generierung der gewünschten elektronischen Signatur 188 zugeordnet wird. Mit auf die Anforderung Ai folgenden Anforderungen wird nach dem gleichen Verfahren vorgegangen.

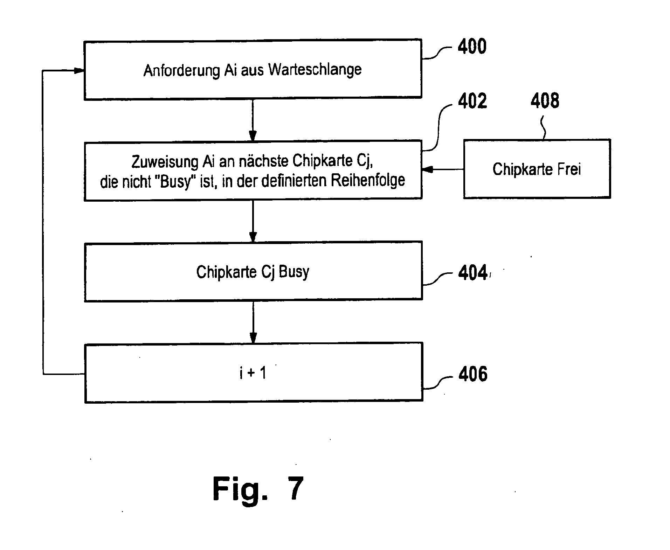

Die Figur 7 zeigt eine Ausführungsform eines erfindungsgemäßen Massensignaturverfahrens. In dem Schritt 400 greift der Scheduler auf die Anforderung Ai der Warteschlange, welche als nächste zur Bearbeitung an der Reihe ist, zu. In dem Schritt 402 weist der Scheduler diese Anforderung Ai an eine der für die gewünschte elektronische Signatur zur Verfügung stehenden Chipkarten zu, die den Status "frei" haben. Die Zuweisung der Anforderung Ai erfolgt dabei beispielsweise an die freien Chipkarten in der durch deren laufende Nummer j gegebenen Reihenfolge. In dem Schritt 404 wird die Chipkarte Cj, der die Anforderung Ai in dem Schritt 402 zugeordnet worden ist, auf den Status "busy" gesetzt. In dem Schritt 406 wird der Index i inkrementiert, so dass nachfolgend die nächste Anforderung Ai der Warteschlange verarbeitet wird.

In dem zu den Schritten 400 bis 406 asynchron ablaufenden Schritt 408 erhält der Scheduler von der Chipkarte Cj oder einer anderen Chipkarte, der zuvor ein Element der Warteschlange zugeordnet worden ist, die Information "Chipkarte frei", woraufhin der Scheduler den Status der betreffenden Chipkarte von "busy" auf "frei" setzt. Die Information "Chipkarte frei" kann implizit durch die Rückgabe einer Signatur durch eine der Chipkarten gegeben sein, da dies bedeutet, dass die Chipkarte nachfolgend ein weiteres Element der Warteschlange verarbeiten kann.

Für die Durchführung der Massensignaturen können beispielsweise erste und zweite Mengen von Chipkarten definiert werden, denen jeweils eine Warteschlange und ein Scheduler zugeordnet ist. Beispielsweise dienen die Chipkarten der ersten Menge zur Generierung von elektronischen Signaturen eines ersten der Teilnehmer. Dementsprechend beinhaltet die der ersten Menge von Chipkarten zugeordnete Warteschlange nur Anforderungen, die von diesem ersten der Teilnehmer herrühren.

Die zweite Menge von Chipkarten der Massensignaturvorrichtung 178 dient dagegen zur Generierung elektronischen Signaturen eines Dritten, wie zum Beispiel des Betreibers des Computersystems 100. Die der zweiten Menge von Chipkarten zugeordnete Warteschlange beinhaltet dementsprechend Anforderungen verschiedener Teilnehmer, die dem Betreiber des Computersystems 100 eine Vollmacht erteilt haben, die Dokumente dieser Teilnehmer mit der elektronischen Signatur des Betreibers zu signieren. Ferner können auch dedizierte Warteschlangen für bestimmte Arten von elektronischen Signaturen, wie zum Beispiel einfachen, fortgeschrittenen oder qualifizierten Massensignaturen gebildet werden, die entsprechenden Mengen von Chipkarten, die die jeweils gewünschte Art einer elektronischen Signatur generieren können, zugeordnet sind.

Für jede dieser verschieden Optionen können in der Konfigurationskomponente 116 (vgl. Figuren 1, 2 und 4) entsprechende Methoden definiert sein, beispielsweise eine Methode M6 zur Aufruf eines Workflows, der eine Massensignatur mit der Signatur eines bestimmten der Teilnehmer beinhaltet. Diese Methode M6 kann daher auch nur durch diesen Teilnehmer nach vorheriger Authentifizierung aufgerufen werden. Ferner kann eine Methode M7 definiert sein, die eine Massensignatur mit der elektronischen Signatur des Betreibers der Computersystems 100 beinhaltet.

### Bezugszeichenliste

- 100: Computersystem
- 102: Kommunikationsschnittstelle
- 102': Datenprotokoll
- 102": WSDL Dokument
- 104: Authentifizierungskomponente
- 106: Signierungskomponente
- 108: Verifizierungskomponente
- 110: Archivierungskomponente
- 112: Konvertierungskomponente
- 112': Konvertergruppe
- 112": Konvertergruppe
- 114: Analyse-Komponente
- 116: Konfigurationskomponente
- 118: Computersystem
- 120: Anwendungsprogramm
- 122: Datei
- 124: Kommunikationsschnittstelle
- 126: Netzwerk
- 128: Computersystem
- 130: Anwendungsprogramm
- 132: Datei
- 134: Kommunikationsschnittstelle
- 136: Signatur-Client
- 138: Chipkartenlesegerät
- 140: Chipkarte
- 142: TCP/IP-Port
- 144: TCP/IP-Port
- 146: TCP/IP-Port
- 148: Konverter
- 150: Konverter
- 152: Konverter
- 154: Konverter
- 156: Konverter
- 158: Konverter
- 160: Standardport
- 162: Standardport
- 164: Trust-Center
- 166: Computersystem
- 168: Anwendungsprogramm
- 170: signiertes Dokument
- 171: Kommunikationsschnittstelle
- 172: unsigniertes Dokument
- 174: Tape Library
- 176: Warteschlange
- 178: Massensignaturvorrichtung
- 180: Scheduler
- 182: Statusdaten
- 184: Timeout-Komponente
- 186: Anforderung
- 188: elektronischen Signatur

## Patentansprüche

1. Computersystem mit
- Mitteln (102; 102' , 102") zur Herstellung von Kommunikationsverbindungen mit mehreren externen Teilnehmer-Computersystemen (118, 128; 166) mehrerer Teilnehmer,
- Mitteln (106) zur Signierung von Daten, die von einem der externen Teilnehmer-Computersysteme empfangen worden sind, durch eine erste Funktion, wobei die Mittel zur Signierung zur Durchführung eines parallelisierten Massensignaturverfahrens ausgebildet sind,
- Mitteln (176, 180) zur dynamischen Lastverteilung zwischen mehreren Chipkarten, die zur Generierung der elektronischen Signaturen vorgesehen sind,
- Mitteln (108) zur Verifizierung einer elektronischen Signatur von Daten, die von einem der externen Teilnehmer-Computersystemen empfangen worden sind, durch eine zweite Funktion,
- Mitteln (110) zur Archivierung von Daten, die von einem der externen Teilnehmer-Computersysteme empfangen worden sind, durch eine dritte Funktion,
- Mitteln zur Weiterleitung von Daten, die von einem der externen Teilnehmer-Computersysteme empfangen worden sind, an ein anderes der externen Teilnehmer-Computersysteme über eine der Kommunikationsverbindungen, durch eine vierte Funktion,
- Mitteln (116) zur Verfügungstellung von Methoden (M1, M2, M3,...), wobei jede der Methoden durch zumindest eine der ersten bis vierten Funktionen oder durch eine sequentielle und/oder parallele Verkettung von mehreren der ersten bis vierten Funktionen definiert ist, und wobei zumindest einige der Methoden mehrere der ersten bis vierten Funktionen beinhalten,
- Mitteln zur Ermöglichung eines Aufrufs der Methoden durch die externen Teilnehmer-Computersysteme über die Kommunikationsverbindungen,
- Mitteln (104) zur Authentifizierung der Teilnehmer und/oder der externen Teilnehmer-Computersysteme, wobei die Mittel zur Authentifizierung zur Durchführung eines kryptographischen Protokolls mit Hilfe eines Zertifikats ausgebildet sind,
wobei der Aufruf einer der Methoden durch eines der externen Teilnehmer-Computersysteme die vorherige Authentifizierung des Teilnehmers dieses externen Teilnehmer-Computersystems und/oder des externen Teilnehmer-Computersystems gegenüber dem Computersystem voraussetzt.

2. Computersystem nach Anspruch 1, mit Mitteln (112; 112', 112") zur Konvertierung der Daten von einem Sender-Format eines ersten der Teilnehmer in ein Format des Computersystems und zur Konvertierung der Daten von dem Format des Computersystems in ein Empfänger-Format eines zweiten der Teilnehmer.

3. Computersystem nach Anspruch 2, wobei die Mittel zur Konvertierung über Methoden aufrufbar sind, und wobei die Mittel zur Konvertierung teilnehmerspezifisch konfigurierbar sind und als teilnehmerspezifische Methoden mittels einer entsprechenden Teilnehmerkennung von dem betreffenden Teilnehmer aufrufbar sind.

4. Computersystem nach einem der vorhergehenden Ansprüche, mit einem Web-Service, wobei der Web-Service die Methoden beinhaltet, wobei der Web-Service ein WSDL Dokument beinhaltet, welches eine Beschreibung der Methoden und deren Parameter enthält, wobei das WSDL Dokument von den Teilnehmern über die Kommunikationsverbindungen abrufbar ist, wobei ein WSDL Dokument des Web-Service, welches eine Beschreibung der Methoden und deren Parameter enthält, in einem externen Verzeichnis gespeichert ist, aus dem es von den Teilnehmern über ein öffentliches Netzwerk abrufbar ist.

5. Computersystem nach Anspruch 4, wobei die Mittel zur Signierung Warteschlangen-Mittel(176), zur Bildung einer Warteschlange für die Ausführung von Aufrufen der ersten Funktion aufgrund des Aufrufs entsprechender die erste Funktion beinhaltenden Methoden aufweist, sowie mit einer Massensignaturvorrichtung (178) mit mehreren Chipkarten, wobei jede der Chipkarten zur Generierung einer elektronischen Signatur ausgebildet ist, und mit Scheduler-Mitteln (180) zur Zuordnung eines Elements der Warteschlange, welches als nächstes an der Reihe ist, zu einer der Chipkarten.

6. Computersystem nach Anspruch5, wobei für die Chipkarten eine vorgegebene Reihenfolge definiert ist, und wobei jede Chipkarte einen ersten oder einen zweiten Status hat, wobei die Chipkarte nur in dem ersten Status ein Element der Warteschlange zur Generierung einer elektronischen Signatur verarbeiten kann, und wobei die Scheduler-Mittel so ausgebildet sind, dass ein Element der Warteschlange, welches als nächstes an der Reihe ist, einer der Chipkarten, die den ersten Status hat, in der vorgegebenen Reihenfolge der Chipkarte zugeordnet wird.

7. Computersystem nach Anspruch 6, wobei die Scheduler-Mittel eine Timeout-Komponente (184) haben, die so ausgebildet ist, dass eine der Chipkarten, die länger als einen vorgegebenen Zeitraum in dem zweiten Status verharrt, aus der vorgegebenen Reihenfolge der Chipkarten entfernt wird, und dass ein zuvor dieser Chipkarte zugeordnetes Element der Warteschlange durch die Scheduler-Mittel einer der in der vorgegebenen Reihenfolge verbleibenden Chipkarten erneut zugeordnet wird.

8. Computersystem nach einem der vorhergehenden Ansprüche, mit Mitteln zur Konvertierung der von einem Teilnehmer empfangenen Daten in ein Format einer Auszeichnungssprache und zur Konvertierung der Daten von dem Format der Auszeichnungssprache in ein Empfänger-Format, wobei das Format der Auszeichnungssprache als Verarbeitungsformat dient.

9. Verfahren zur Signierung, Signaturverifizierung, Archivierung und / oder Weiterleitung von Daten mittels eines Computersystems, wobei das Computersystem eine Schnittstelle zur Herstellung von Kommunikationsverbindungen mit mehreren Teilnehmern aufweist, und über die Schnittstelle der Aufruf von Methoden des Computersystems durch die Teilnehmer erfolgen kann, wobei jede der Methoden zumindest durch eine Funktion zur Signierung, Signaturverifizierung, Archivierung und / oder Weiterleitung von Daten oder einer sequentiellen oder parallelen Verkettung solcher Funktionen, definiert ist, mit folgenden Schritten:
- Aufbau einer Kommunikationsverbindung eines der Teilnehmer mit dem Computersystem zum Empfangen von Daten des Teilnehmers,
- Ausführung einer von dem Teilnehmer aufgerufenen Methode,
- wobei die Signierung mit einem parallelisierten Massensignaturverfahren erfolgt, wobei eine dynamische Lastverteilung zwischen mehreren Chipkarten einer Massensignaturvorrichtung (178) erfolgt, wobei jede der Chipkarten zur Generierung einer elektronischen Signatur ausgebildet ist.

10. Verfahren nach Anspruch 9, wobei die von dem einen der Teilnehmer empfangenen Daten in das Format einer Auszeichnungssprache konvertiert werden und/oder wobei die Daten an einem Port des Computersystems empfangen werden, der dem Format der Daten zugeordnet ist.

11. Verfahren nach Anspruch 10, wobei das parallelisierte Massensignaturverfahren die folgenden Schritte beinhaltet:
- Bildung einer Wartschlange für die Ausführung der ersten Funktionen aufgrund des Aufrufs entsprechender die erste Funktion beinhaltender Methoden,
- Zuordnung des Elements der Warteschlange, welches als nächstes an der Reihe ist, zu einer Chipkarte der Massensignaturvorrichtung (178), die mehrere Chipkarten beinhaltet.

12. Verfahren nach Anspruch 11, wobei für die Chipkarten eine vorgegebene Reihenfolge definiert ist, und wobei jede Chipkarte einen ersten oder einen zweiten Status hat, wobei jede Chipkarte nur in dem ersten Status ein ihr zugeordnetes Element der Warteschlange zur Generierung einer elektronischen Signatur verarbeiten kann, und wobei die Zuordnung eines Elements der Warteschlange, welches als nächstes an der Reihenfolge ist, so erfolgt, dass die Zuordnung dieses Elements zu einer der Chipkarten, die den ersten Status hat, in der vorgegebenen Reihenfolge der Chipkarten erfolgt, und wobei vorzugsweise eine Chipkarte, die länger als einen vorgegebenen Zeitraum in dem zweiten Status verharrt, aus der vorgegebenen Reihenfolge der Chipkarten entfernt wird, und wobei vorzugsweise ein zuvor dieser Chipkarte zugeordnetes Element der Warteschlange einer in der vorgegebenen Reihenfolge verbleibenden Chipkarte erneut zugeordnet wird, und/oder wobei für einen ersten der Teilnehmer eine erste Warteschlange gebildet wird, die nur Aufrufe der ersten Funktion des ersten des Teilnehmers beinhaltet, und wobei für mehrere zweite Teilnehmer eine gemeinsame zweite Warteschlange gebildet wird, die Aufrufe der ersten Funktion von den zweiten Teilnehmern beinhaltet.

13. Computerprogrammprodukt, insbesondere digitales Speichermedium, mit Computer ausführbaren Instruktionen zur Durchführung eines Verfahrens nach einem der Patentansprüche 9 bis 12.

## Claims

1. A computer system, comprising
- means (102; 102', 102") for producing communication links to a plurality of external subscriber computer systems (118; 128; 166) of a plurality of subscribers,
- means (106) for signing data, which has been received by one of the external subscriber computer systems, by a first function, wherein the means for signing are designed to carry out a parallelised mass signature method,
- means (176, 180) for dynamic load distribution between a plurality of chip cards provided for generation of the electronic signatures,
- means (108) for verifying an electronic signature of data, which has been received by one of the external subscriber computer systems, by a second function,
- means (110) for archiving data, which has been received by one of the external subscriber computer systems, by a third function,
- means for forwarding data, which has been received by one of the external subscriber computer systems, to another of the external subscriber computer systems via one of the communication links by a fourth function,
- means (116) for providing methods (M1, M2, M3, ...), wherein each of the methods is defined by at least one of the first to fourth functions or by a sequential and/or parallel chaining of a plurality of the first to fourth functions, and wherein at least some of the methods comprise a plurality of the first to fourth functions,
- means for enabling a call of the methods by the external subscriber computer systems via the communication links,
- means (104) for authenticating the subscribers and/or the external subscriber computer systems, wherein the means for authentication are designed to carry out a cryptographic protocol with the aid of a certificate, wherein the call of one of the methods by one of the external subscriber computer systems presupposes the prior authentication of the subscriber of this external subscriber computer system and/or of the external subscriber computer system to the computer system.

2. The computer system according to Claim 1, comprising means (112; 112', 112") for converting the data from a sender format of a first of the subscribers into a format of the computer system and for converting the data from the format of the computer system into a receiver format of a second of the subscribers.

3. The computer system according to Claim 2, wherein the conversion means can be called via methods, and wherein the conversion means can be configured in a subscriber-specific manner and can be called as subscriber-specific methods by the subscriber in question by means of a corresponding subscriber identification.

4. The computer system according to one of the preceding claims, comprising a web service, wherein the web service comprises the methods, wherein the web service comprises a WSDL document which contains a description of the methods and parameters thereof, wherein the WSDL document can be called by the subscribers via the communication links, wherein a WSDL document of the web service which contains a description of the methods and parameters thereof is stored in an external directory, from which it can be called by the subscribers via a public network.

5. The computer system according to Claim 4, wherein the means for signing comprises queue means (176) for forming a queue for the execution of calls of the first function on the basis of the call of corresponding methods comprising the first function, and also comprising a mass signature device (178) with a plurality of chip cards, wherein each of the chip cards is designed for generation of an electronic signature, and comprising scheduler means (180) for assigning to one of the chip cards an element that is next in the queue.

6. The computer system according to Claim 5, wherein a predefined order is defined for the chip cards, and wherein each chip card has a first or a second status, wherein only in the first status can the chip card process an element in the queue in order to generate an electronic signature, and wherein the scheduler means are designed such that an element that is next in the queue is assigned to one of the chip cards having the first status in the predefined order of the chip cards.

7. The computer system according to Claim 6, wherein the scheduler means have a time-out component (184) that is designed such that one of the chip cards remaining longer than a predefined period in the second status is removed from the predefined order of the chip cards, and in that an element in the queue, said element being previously assigned to this chip card, is reassigned by the scheduler means to one of the chip cards remaining in the predefined order.

8. The computer system according to one of the preceding claims, comprising means for converting the data received by a subscriber into a format of a display language and for converting the data from the format of the display language into a receiver format, wherein the format of the display language serves as a processing format.

9. A method for signing, signature verification, archiving and/or forwarding data by means of a computer system, wherein the computer system comprises an interface for producing communication links with a plurality of subscribers, and methods of the computer system can be called by the subscribers via the interface, wherein each of the methods is defined at least by a function for signing, signature verification, archiving and/or forwarding of data or a sequential or parallel chaining of such functions, said method comprising the following steps:
- a communication link is established between one of the subscribers and the computer system for receiving data from the subscriber,
- a method called by the subscriber is executed,
- wherein the signing process is carried out with a parallelised mass signature method, wherein there is a dynamic load distribution between a plurality of chip cards of a mass signature device (178), wherein each of the chip cards is designed to generate an electronic signature.

10. The method according to Claim 9, wherein the data received from one of the subscribers is converted into the format of a display language, and/or wherein the data is received at a port of the computer system assigned to the format of the data.

11. The method according to Claim 10, wherein the parallelised mass signature method comprises the following steps:
- a queue for the execution of the first functions is formed on the basis of the call of corresponding methods comprising the first function,
- the element that is next in the queue is assigned to a chip card of the mass signature device (178), which comprises a plurality of chip cards.

12. The method according to Claim 11, wherein a predefined order is defined for the chip cards, and wherein each chip card has a first or a second status, wherein each chip card only in the first status can process an element, assigned thereto, in the queue in order to generate an electronic signature, and wherein an element which is next in the queue is assigned such that this element is assigned to one of the chip cards in the predefined order having the first status, and wherein preferably one chip card remaining longer than a predefined period in the second status is removed from the predefined sequence of the chip cards, and wherein preferably an element of the queue assigned previously to this chip card is reassigned to a chip card remaining in the predefined order, and/or wherein a first queue is formed for a first of the subscribers and includes only calls of the first function of the first of the subscribers, and wherein a common second queue is formed for a plurality of second subscribers, said second queue including calls of the first function by the second subscribers.

13. A computer program product, in particular a digital storage medium, comprising instructions executable on a computer for carrying out a method according to one of Patent Claims 9 to 12.

## Revendications

1. Système informatique avec
- des moyens (102 ; 102', 102") pour l'établissement de liaisons de communication avec plusieurs systèmes informatiques d'abonnés externes (118, 128 ; 166) de plusieurs abonnés,
- des moyens (106) pour la signature de données reçues par l'un des systèmes informatiques d'abonnés externes, par une première fonction, les moyens pour la signature de données étant conçus pour l'exécution d'un procédé de signature en masse parallélisé,
- des moyens (176, 180) pour la répartition de charge dynamique entre plusieurs cartes à puce prévues pour générer les signatures électroniques,
- des moyens (108) pour la vérification d'une signature électronique relative à des données reçues par l'un des systèmes informatiques d'abonnés externes, par une deuxième fonction,
- des moyens pour la transmission de données reçues par l'un des systèmes informatiques d'abonnés externes à un autre parmi les systèmes informatiques d'abonnés externes, par des liaisons de communication, par une quatrième fonction,
- des moyens (116) pour la mise à disposition de méthodes (M1, M2, M3, ...), où chacune des méthodes est définie par au moins l'une des première à quatrième fonctions ou par une concaténation séquentielle et/ou parallèle de plusieurs parmi première à quatrième fonctions, et où au moins quelques-unes parmi les méthodes contiennent plusieurs des première à quatrième fonctions,
- des moyens permettant une utilisation des méthodes par les systèmes informatiques d'abonnés externes, par les liaisons de communication,
- des moyens (104) pour l'authentification des abonnés et/ou des systèmes informatiques d'abonnés externes, les moyens pour l'authentification étant conçus pour l'exécution d'un protocole cryptographique à l'aide d'un certificat,
dans lequel l'utilisation de l'une des méthodes par l'un des systèmes informatiques d'abonnés externes suppose l'authentification préalable de l'abonné à ce système informatique d'abonné externe et/ou du système informatique d'abonné externe vis-à-vis du système informatique.

2. Système informatique selon la revendication 1, avec des moyens (112 ; 112', 112") pour la conversion de données d'un format d'expéditeur d'un premier abonné vers un format du système informatique, et pour la conversion des données du format du système informatique vers un format de destinataire d'un deuxième abonné.

3. Système informatique selon la revendication 2, dans lequel les moyens pour la conversion peuvent être appelés par des méthodes, et dans lequel les moyens pour la conversion peuvent être configurés spécifiquement pour chaque abonné et appelés par l'abonné concerné en tant que méthodes spécifiques à un abonné, à l'aide d'un identificateur d'abonné correspondant.

4. Système informatique selon l'une des revendications précédentes, avec un service internet, dans lequel le service internet contient les méthodes, dans lequel le service internet contient un document WSDL contenant une description des méthodes et de leurs paramètres, dans lequel le document WSDL est accessible aux abonnés par les liaisons de communication, dans lequel un document WSDL du service internet contenant une description des méthodes et de leurs paramètres est enregistré dans un répertoire externe, à partir duquel il est accessible aux abonnés par un réseau public.

5. Système informatique selon la revendication 4, dans lequel les moyens pour la signature comportent des moyens de file d'attente (176) destinés à former une file d'attente pour l'exécution de recours à la première fonction sur la base du recours à des méthodes correspondantes contenant la première fonction, et avec un dispositif de signature en masse (176) avec plusieurs cartes à puce, chacune des cartes à puce étant conçue pour générer une signature électronique, et avec des moyens de planification (180) pour l'attribution d'un élément de la file d'attente dont le tour est arrivé à l'une des cartes à puce.

6. Système informatique selon la revendication 5, dans lequel un ordre de succession prédéterminé est défini pour les cartes à puce, et dans lequel chaque carte à puce a un premier ou un deuxième statut, dans lequel la carte à puce ne peut traiter un élément de la file d'attente qu'avec le premier statut pour générer une signature électronique, et dans lequel les moyens de planification sont conçus de telle façon, qu'un élément de la file d'attente dont le tour est arrivé est attribué à l'une des cartes à puce ayant le premier statut, selon l'ordre de succession prédéterminé de la carte à puce.

7. Système informatique selon la revendication 6, dans lequel les moyens de planification possèdent un composant de temps limite (184) conçu de manière à ce qu'une carte à puce gardant le deuxième statut au-delà d'une durée prédéterminée soit éliminée de l'ordre de succession des cartes à puce, et à ce qu'un élément de la file d'attente auparavant attribué à cette carte à puce soit réattribué par les moyens de planification à l'une des cartes à puce encore présentes dans l'ordre de succession prédéterminé.

8. Système informatique selon l'une des revendications précédentes, avec des moyens pour la conversion des données reçues par un abonné vers un format de langage de balisage, et pour la conversion des données du format du langage de balisage vers un format de destinataire, dans lequel le format du langage de balisage sert de format de traitement.

9. Procédé pour la signature, la vérification de signature, l'archivage et/ou la transmission de données au moyen d'un système informatique, dans lequel le système informatique comporte une interface pour l'établissement de liaisons de communication avec plusieurs abonnés, et dans lequel des méthodes du système informatique sont accessibles aux abonnés par l'interface, dans lequel chacune des méthodes est définie au moins par une fonction pour la signature, la vérification de signature, l'archivage et/ou la transmission de données, ou encore par une concaténation séquentielle ou parallèle de telles fonctions, avec les étapes suivantes :
- établissement d'une liaison de communication de l'un des abonnés avec le système informatique pour la réception de données de l'abonné,
- exécution d'une méthode appelée par l'abonné,
- dans lequel la signature est réalisée par un procédé de signature en masse parallélisé, dans lequel une répartition de charge dynamique a lieu entre plusieurs cartes à puce d'un dispositif de signature en masse (178), dans lequel chacune des cartes à puce est conçue pour générer une signature électronique.

10. Procédé selon la revendication 9, dans lequel les données reçues par l'un des abonnés sont converties dans le format d'un langage de balisage, et/ou dans lequel les données sont reçues sur un port du système informatique attribué au format des données.

11. Procédé selon la revendication 10, dans lequel le procédé de signature de masse parallélisé contient les étapes suivantes :
- formation d'une file d'attente pour l'exécution des premières fonctions sur la base du recours à des méthodes correspondantes contenant la première fonction,
- attribution de l'élément de la file d'attente dont le tour est arrivé à une carte à puce du dispositif de signature de masse (178) contenant plusieurs cartes à puce.

12. Procédé selon la revendication 11, dans lequel un ordre de succession prédéterminé est défini pour les cartes à puce, et dans lequel chaque carte à puce a un premier ou un deuxième statut, dans lequel chaque carte à puce ne peut traiter un élément de la file d'attente qui lui est attribué qu'avec le premier statut pour générer une signature électronique, et dans lequel l'attribution d'un élément de la file d'attente dont le tour est arrivé est effectuée de manière à ce que l'attribution de cet élément à une carte à puce ayant le premier statut se fasse dans un ordre de succession de cartes à puce prédéterminé, et dans lequel une carte à puce gardant le deuxième statut au-delà d'une durée prédéterminée est de préférence éliminée de l'ordre de succession des cartes à puce, et dans lequel un élément de la file d'attente auparavant attribué à cette carte à puce est de préférence réattribué à l'une des cartes à puce encore présentes dans l'ordre de succession prédéterminé, et/ou dans lequel une première file d'attente ne contenant que des appels de première fonction d'un premier abonné est formée pour le premier abonné, et dans lequel une deuxième file d'attente commune contenant les appels de première fonction de plusieurs deuxièmes abonnés est formée pour les deuxièmes abonnés.

13. Produit de programme informatique, en particulier un moyen de stockage numérique, avec des instructions exécutables par ordinateur, pour l'exécution d'un procédé selon l'une des revendications 9 à 12.
